(19) Europäisches Patentamt
European Patent Office
Office européen des brevets

(11) **EP 1 970 180 B1**

(12) **EUROPÄISCHE PATENTSCHRIFT**

(45) Veröffentlichungstag und Bekanntmachung des Hinweises auf die Patenterteilung:
**05.05.2010 Patentblatt 2010/18**

(51) Int Cl.:
***B29B 9/06*** (2006.01)

(21) Anmeldenummer: **08012023.1**

(22) Anmeldetag: **15.02.2006**

(54) **Anfahrventil für Granuliervorrichtung**

Startup valve vor granulating device

Valve de démarrage pour granulateur

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.02.2005 DE 102005007102**

(43) Veröffentlichungstag der Anmeldung:
**17.09.2008 Patentblatt 2008/38**

(62) Dokumentnummer(n) der früheren Anmeldung(en) nach Art. 76 EPÜ:
**06706966.6 / 1 851 023**

(73) Patentinhaber: **Gala Industries, Inc.**
**Eagle Rock, VA 24085 (US)**

(72) Erfinder:
• **Eloo, Michael**
**46509 Xanten (DE)**
• **Veltel, Jürgen**
**47626 Kevelaer (DE)**

(74) Vertreter: **Thoma, Michael et al**
**Lorenz - Seidler - Gossel**
**Widenmayerstraße 23**
**80538 München (DE)**

(56) Entgegenhaltungen:
**US-A- 4 321 026      US-A- 4 984 977**
**US-A- 5 650 179      US-A- 5 879 720**
**US-A- 6 019 916**

**Beschreibung**

Die Erfindung betrifft ein Anfahrventil für eine Granuliervorrichtung zum Granulieren von Kunststoffen und/oder Polymeren mit einem Schmelzeerzeugeranschluss, einem Granulatoranschluss sowie einem Schmelzekanal zur Verbindung des Schmelzeerzeugeranschlusses mit dem Granulatoranschluss, sowie eine solche Granuliervorrichtung mit einem solchen Anfahrventil, wobei an den zumindest zwei Granulatoranschlüssen jeweils ein Granulierkopf angeschlossen und an dem Schmelzeereugeranschluss ein Schmelzeerzeuger mit variablem Schmelzevolumenstrom angeschlossen ist.

Zum Anfahren von Granuliereinrichtungen werden regelmäßig Anfahrventile eingesetzt, über die der Granulator an den Schmelzeerzeuger angeschlossen wird. Dies gilt insbesondere für komplexe Produktionsprozesse, deren Aufstartvorgang schwierig ist, sowie für Anwendungen, bei denen möglichst schnell gleichmäßiges Granulat erzeugt werden soll. Derartige Anfahrventile sind beispielsweise in der DE 102 34 228 A1, der DE 38 15 897 C2 oder der EP 0 698 461 B1 beschrieben. Diese Anfahrventile umfassen in dem Schmelzekanal, der die Einlassöffnung des Ventils am Schmelzeerzeugeranschluss mit der Auslassöffnung am Granulatoranschluss verbindet, eine Anfahrweiche, die in der Produktionsstellung die Verbindung des Schmelzeerzeugeranschlusses mit dem Granulatoranschluss durchschaltet, während sie in ihrer Anfahrstellung den Schmelzefluss von der Auslassöffnung am Granulatoranschluss fernhält, d. h. diesen absperrt und den Schmelzeverlust umlenkt, so dass der am Schmelzeerzeugeranschluss eintretende Schmelzefluss nicht zu dem Granulatoranschluss gelangt, sondern statt dessen an einer Bypassöffnung des Ventils austritt und regelmäßig einfach auf den Boden fließt. Ist die Granuliereinrichtung hochgefahren, so dass alle Aggregate mit den gewünschten Betriebsparameters arbeiten und der Schmelzefluss die gewünschte Güte erreicht hat, wird die Anfahrweiche in ihre Produktionsstellung umgeschalten, so dass der Schmelzefluss in dem Anfahrventil zu dessen Granulatoranschluss strömt und sodann durch den dort angeschlossenen Granulator zu Pellets verarbeitet wird. Eine Granuliervorrichtung der genannten Art mit einem Anfahrventil, das wahlweise auf einen von zwei Granulatoranschlüssen geschaltet werden kann, ist beispielsweise aus der US 5,879,720 bekannt. Dabei zeigt beispielsweise die US 4,321,026 eine elektromotorische Verstellung eines Anfahrventils zwischen seiner Produktionsstellung und seiner Bypassstellung. Ein ähnliches Anfahrventil ist aus der Schrift US 4,984,977 bekannt, bei dem ein Schmelzekanal mittels eines längsverschiebbaren Drehschiebers wahlweise auf einen Granulatoranschluss oder einen Bypasskanal geschaltet werden kann, wobei in der auf den Granulatoranschluss durchgeschalteten Ventilstellung der Strömungsquerschnitt durch Verdrehen des Ventilkorpus variiert werden kann, um die Drosselung des Schmelzestroms zu steuern. Ein weiteres Aufahrventil ist aus der Druckschrift WO92/11993 bekannt.

Mit solchen bekannten Anfahrventilen lässt sich zwar der Aufstartvorgang eines Produktionsprozesses als solcher in zufriedenstellender Weise bewerkstelligen, zu Problemen kommt es jedoch beim Wechsel von einem Produktionsprozess zu einem zweiten Produktionsprozess, beispielsweise bei einer Änderung der Polymer- /Füllstoffmischung, einer Änderung der Granulatgeometrie, einer Umstellung auf geänderte Durchsatzansprüche, bei einer Änderung der Farbe des Granulats oder auch bei planmäßigen oder unplanmäßigen Produktionsunterbrechungen für z. B. Reparaturen an der Düsenplatte. Das sich ergebende Problem hierbei ist, dass das gesamte Anfahrventil einschließlich des Schmelzekanals im Inneren des Ventils komplett gereinigt werden muss, bevor die Anlage wieder angefahren werden kann. Ohne eine solche Reinigung würde es beispielsweise bei der Umstellung von einem farbigen Granulat auf ein weißes Granulat lang anhaltend zu Verschmutzungen kommen. Zum Reinigen müssen herkömmliche Anfahrventile regelmäßig abgebaut werden, wodurch der Produktionsprozess länger anhaltend unterbrochen wird. Zudem ist nachfolgend der Reinigung auch die Rüstzeit zu berücksichtigen, die beispielsweise zum Anwärmen der Anfahrweiche auf Betriebstemperatur benötigt wird.

Die mögliche Alternative, für solche Wechsel zwischen zwei Produktionsprozessen zwei separate Anfahrventile bereitzuhalten ist für viele Betreiber solcher Anlagen nicht akzeptabel. Zum Einen fallen die Kosten für zwei vollständige Anfahrventile an. Hiervon abgesehen fallen auch beim Einsatz zweier separater Anfahrventile die Zeitverzögerungen z. B. durch das Anfahren des neuen Anfahrventils auf Betriebstemperatur an.

Ferner beschreibt die DE 696 21 101 T2 die Möglichkeit des Viskositätswechsels innerhalb eines Compoundiervorganges mit anschließender Granulierung bei einer entsprechenden Großproduktionsanlage mit mindestens 1000 kg/h Leistung. An das dem Schmelzeerzeuger nachgeschaltete Ventil sind zwei Granulierköpfe angeschlossen, so dass durch Umschalten des Ventils hochviskoses Material auf den einen Granulierkopf und niedrigviskoses Material auf den anderen Granulierkopf gegeben werden kann. Die Problematik der Anfahrverluste ist hierbei jedoch nicht gelöst, vielmehr soll in an sich bekannter Weise bis zum Erreichen des jeweiligen Betriebspunktes noch nicht granulierbares Material über eine Bypassöffnung ausgeschieden werden. Ferner ist in der DE 197 54 863 C2 eine Granuliervorrichtung beschrieben, bei der an ein 1/3-Ventil zwei Granulierköpfe angeschlossen sind, so dass bei einem Farbwechsel von schwarzem auf weißes Material bzw. umgekehrt wahlweise der eine oder der andere Granulierkopf ausgewählt werden kann. Um dabei Farbverunreinigungen bei einem Farbwechsel sozusagen auszuspülen, ist in dem Ventil ein zentraler Bypassausgang vorgesehen, über den nach einem Farbwechsel im Schmelzeerzeuger solange Material der neuen Farbe ausgeschieden wird, bis auch die letzten Verunreinigungen mitgenommen sind. Dies ist in Bezug auf die vorgenannte Zielsetzung, Anfahrverluste zu vermindern und teuren Materialabfall zu reduzieren, eher kontraproduktiv denn hilfreich. Schließlich ist aus der DE 100 30 584 ein Mehrwegdrehschieberventil für Granulieranlagen bekannt, mit Hilfe dessen hochmolekulare Kunststoffschmelzen verteilt bzw. aufgeteilt werden können. Die Problematik der Anfahrverluste ist jedoch auch in dieser Druckschrift nicht angesprochen.

Bei üblichen Aufbau einer Unterwassergranulieranlage sind die auftretenden Anfahrverluste und der entsprechende Materialverlust durchaus kostenintensiv. Insbesondere bei einfriersensitiven Polymeren oder Kunststoffen, z. B. Produkten mit hohem Kristallitschmelzpunkt, ist es erforderlich, mit einem Minimaldurchsatz von mehr als 10 kg/h pro Düsenbohrung zu starten und zu operieren. Nach dem eigentlichen Startvorgang ist das anschließende Durchsatzsteigern in der Regel unproblematisch. Allerdings entstehen durch den Startvorgang selbst Materialverluste durch Anfahrware in Klotzform auf dem Boden, die durchaus mehrere Kilo betragen können. Dies ist nicht nur unwirtschaftlich, weil die teueren Rohmaterialen in eine nicht verkaufbare Form transferiert werden, sondern auch unangenehm für den Betreiber einer entsprechenden Produktionsanlage, da die Klötze relativ groß geraten können, teuer zerkleinert und schließlich entsorgt werden müssen. Nicht zuletzt stellt ein solcher über den Bypass-Ausgang des Anfahrventils ausgeschiedener heißer Schmelzeklotz mit Temperaturen von ggf. mehr als 250°C auch ein potentielles Sicherheitsrisiko dar. Die Problematik der Ausscheidung von Kunststoffschmelze über den Bypassausgang tritt dabei nicht nur beim eigentlichen Anfahren einer entsprechenden Produktionsanlage für einen neuen Produktionsjob, sondern auch dann auf, wenn aus verschiedenen möglichen Gründen die Anlage aus dem Durchsatzfenster des Granulierkopfes herausgefahren werden muss, insbesondere der Schmelzevolumenstrom unter die Kapazitätsuntergrenze des jeweiligen Granulierkopfes gefahren werden muss. Auch hier muss bislang das Anfahrventil bisweilen in die Bypassstellung geschaltet werden, so dass entsprechender Materialabfall entsteht.

Der vorliegenden Erfindung liegt daher die Aufgabe zugrunde, eine verbesserte Granuliervorrichtung sowie ein verbessertes Anfahrventil der genannten Art zu schaffen, das Nachteile des Standes der Technik vermeidet und letzteren in vorteilhafter Weise weiterbildet. Vorzugsweise soll ein Anfahren der Granulierung mit möglichst geringen Anfahrverlusten sowie ein möglichst kontinuierliches Arbeiten ohne Zwischenunterbrechungen des Prozesses und Neuanfahrverlusten erreicht werden.

Diese Aufgabe wird erfindungsgemäß durch ein Anfahrventil gemäß Patentanspruch 1 sowie eine Vorrichtung gemäß Patentanspruch 5 gelöst. Bevorzugte Ausgestaltungen der Erfindung sind Gegenstand der abhängigen Ansprüche.

Die vorliegende Erfindung geht also von dem Gedanken aus, mehrere Granulierköpfe mit verschiedenen Durchlasskapazitäten zu verwenden und hierdurch insgesamt das Durchsatzfenster zu vergrößern, um weitgehend kontinuierlich ohne Zwischenunterbrechungen arbeiten zu können und durch Zuschalten von Granulierköpfen mit kleinen Durchsatzkapazitäten unvermeidliche Anfahrvorgänge zu verkürzen bzw. hinsichtlich der anfallenden Anfahrwaren zu minimieren. Gemäß einem Aspekt der vorliegenden Erfindung werden zum Anfahren des Granulierprozesses nacheinander mehrere Granulierköpfe mit verschiedenen Durchsatzkapazitäten verwendet, wobei zunächst die Schmelze einem ersten Granulierkopf mit kleinerer Durchsatzkapazität zugeführt wird und sodann der Schmelzevolumenstrom erhöht und das Anfahrventil umgeschaltet wird, so dass die Schmelze vom Anfahrventil auf einen zweiten Granulierkopf mit größerer Durchsatzkapazität umgelenkt wird. Durch die Verwendung von zunächst einem Granulierkopf mit möglichst kleiner Durchsatzkapazität verkürzt sich die Zeit und damit die Menge der Anfahrware, bis der Schmelzeerzeuger die Durchsatzuntergrenze des Granulierkopfes erreicht und der Granuliervorgang gestartet werden kann. Von dem Beginn des Granuliervorganges an der unteren Durchsatzgrenze des genannten ersten Granulierkopfes an fällt keine weitere Anfahrware mehr an. Der Schmelzevolumenstrom wird quantitativ solange erhöht, bis das Anfahrventil auf den zweiten Granulierkopf mit der größeren Durchsatzkapazität geschalten werden kann, wobei während dieser Zeitspanne keine Anfahrware anfällt. Zudem wird das Durchsatzfenster insgesamt vergrößert, so dass die Anzahl der unvermeidlichen Anfahrvorgänge mit dabei entstehender Anfahrware reduziert wird, da bei einem aus verschiedenen Gründen ggf. erforderlichen Herabfahren der Schmelzeleistung unter die Durchsatzuntergrenze des größeren Granulierkopfes die Schmelze wieder zurück auf den ersten Granulierkopf geschaltet werden kann.

In vorrichtungstechnischer Hinsicht wird nach einem Aspekt der vorliegenden Erfindung vorgeschlagen, dass die Granuliervorrichtung der eingangs genannten Art eine Steuervorrichtung zur Ansteuerung der Schaltweiche des Anfahrventils in Abhängigkeit des Schmelzevolumenstroms des Schmelzeerzeugers besitzt. Mittels dieser Steuervorrichtung kann das Anfahrventil bei einem kleinen Schmelzevolumenstrom auf den Granulierkopf mit der kleineren Durchlasskapazität geschaltet werden, während bei einem größeren Schmelzevolumenstrom das Anfahrventil auf den zweiten Granulierkopf mit der größeren Durchsatzkapazität geschalten wird. Mit einer solchen Steuervorrichtung kann unabhängig von dem vorgenannten Anfahrvorgang eine beträchtliche Effizienzsteigerung bereits dadurch erreicht werden, dass das Durchsatzfenster der Vorrichtung vergrößert wird und ohne Unterbrechungen über einen größeren Betriebsbereich gearbeitet werden kann, so dass weniger Anfahrvorgänge notwendig werden. Die Steuervorrichtung kann dabei grundsätzlich verschiedene Automatisierungsgrade verwirklichen, beispielsweise halbautomatisch ausgebildet sein dahingehend, dass sie bei Erreichen eines Schmelzevolumenstroms, der einen Betrieb des zweiten Granulierkopfes mit der größeren Durchsatzkapazität erlaubt, eine Anzeige gegeben wird, die einen Anlagenbediener darauf hinweist und dass nach einer entsprechenden Eingabe durch den Anlagenbediener die Steuervorrichtung dann das Anfahrventil in der vorgenannten Weise auf den zweiten Granulierkopf mit der größeren Durchsatzkapazität schaltet, so dass der Schmelzestrom von dem ersten Granulierkopf auf den zweiten Granulierkopf umgeleitet wird. In besonders vorteilhafter Weise kann die Steuervorrichtung auch vollautomatisch ausgebildet sein dahingehend, dass sie bei Bestimmung eines entsprechenden Schmelzevolumenstroms automatisch das Anfahrventil auf den jeweils passenden Granulierkopf schaltet.

Insbesondere kann in Weiterbildung der Erfindung die Steuervorrichtung Steuermittel besitzen, die das Anfahrventil auf den ersten Granulierkopf mit kleinerer Durchsatzkapazität schalten, wenn der Schmelzevolumenstrom unter einer Kapazitätsuntergrenze des zweiten Granulierkopfes mit größerer Durchsatzkapazität, jedoch oberhalb einer Kapazitätsuntergrenze des ersten Granulierkopfes liegt, und die das Anfahrventil auf den zweiten Granulierkopf schalten, wenn der Schmelzevolumenstrom oberhalb der Kapazitätsuntergrenze des zweiten Granulierkopfes sowie noch unterhalb einer Kapazitätsuntergrenze eines ggf. vorhandenen dritten Granulierkopfes mit noch größerer Durchsatzkapazität liegt.

Vorteilhafterweise kann die Steuervorrichtung auch Volumenstromsteuermittel zur Steuerung des Volumenstroms besitzen, der von dem Schmelzeerzeuger in das Anfahrventil eingeleitet wird. Grundsätzlich können dabei verschiedene Schmelzeerzeuger mit veränderlichem Volumenstrom verwendet werden, beispielsweise kann über einen entsprechenden Schneckenextruder der Schmelzestrom erzeugt und gleichzeitig hinsichtlich seines Volumens verändert werden. Gegebenenfalls kann jedoch auch eine Zahnradpumpe zwischen Schmelzeerzeuger und Anfahrventil geschaltet sein, um den Volumenstrom entsprechend zu steuern. Um den Prozess möglichst variabel an verschiedene Randbedingungen anpassen zu können, ist die Steuervorrichtung vorteilhafterweise derart ausgebildet, dass sie den Volumenstrom auch innerhalb der Kapazitätsgrenzen eines Granulierkopfes verändern, vorzugsweise kontinuierlich verändern können.

Insbesondere kann beim Anfahren des Granulierprozesses beim Granulieren mit dem ersten Granulierkopf mit kleinerer Durchsatzkapazität, d.h. noch vor dem Umschalten des Anfahrventils auf den zweiten Granulierkopf, der Schmelzevolumenstrom innerhalb der Durchsatzkapazitätsgrenzen des ersten Granulierkopfes kontinuierlich erhöht werden. Da mit dem ersten Granulierkopf bereits granuliert wird, fällt keine Anfahrware an, wobei durch das Erhöhen des Schmelzevolumenstroms die Anlage kontinuierlich auf den Granulierprozess mit dem zweiten größeren Granulierkopf hingefahren wird.

Vorteilhafterweise wird das Anfahrventil erst dann auf den zweiten Granulierkopf umgeschalten, wenn der Schmelzevolumenstrom bis auf die untere Kapazitätsgrenze des zweiten Granulierkopfes und/oder die obere Kapazitätsgrenze des ersten Granulierkopfes erhöht worden ist.

Grundsätzlich kann das Anfahrventil beim Anfahren der Granulieranlage aus seiner Bypass-Stellung, in der Anfahrware auf den Boden oder ein geeignetes Speicherbehältnis geleitet wird, auf den ersten Granulierkopf geschalten werden, wenn die Minimalbedingungen für einen erfolgreichen Start erreicht sind. Insbesondere kann das Anfahrventil in Weiterbildung der Erfindung in Abhängigkeit der Schmelzeviskosität, der Massetemperatur, dem Massedruck, Entgasungszustand und/oder des Erreichens des notwendigen minimalen Volumenstroms aus der Anfahrstellung auf den ersten Granulierkopf geschalten werden. Vorteilhafterweise können in vorrichtungstechnischer Hinsicht entsprechende Mittel zur Bestimmung, vorzugsweise Sensoren zur Erfassung der genannten Parameter, vorgesehen sein, so dass die Steuervorrichtung in Abhängigkeit der entsprechenden Signale das Anfahrventil entsprechend schalten kann. Anstelle entsprechender Sensoren können die genannten Parameter auch abgeschätzt werden. Zusätzlich zu den genannten Parametern können für das Umschalten des Anfahrventils aus der Anfahrstellung auf den ersten Granulatorkopf auch noch weitere Parameter, wie z. B. Farbe, Füllstoffeinarbeitung oder weitere Schmelze- bzw. Granulatparameter, berücksichtigt werden.

In ähnlicher Weise kann auch das Umschalten des Anfahrventils von dem ersten Granulatorkopf auf den zweiten Granulatorkopf bzw. vom n-ten Granulatorkopf auf den n+1-ten Granulatorkopf nicht nur in Abhängigkeit des Erreichens des notwendigen minimalen Volumenstroms für den zweiten bzw. n+1-ten Granulatorkopf, sondern alternativ oder zusätzlich hierzu in Abhängigkeit weiterer Parameter erfolgen. Insbesondere kann das Anfahrventil in Abhängigkeit der Granulatgröße, des Schmelzemassedrucks, der Massetemperatur der Schmelze oder weiterer Parameter, wie Granulatform, Oberflächenklebrigkeit, Agglomeration, Doppelkornauftreten, Kristallisationseffekte etc., von dem ersten Granulierkopf auf den zweiten Granulierkopf geschalten werden. Ist beispielsweise bei Erreichen der maximal möglichen Granulatordrehzahl bei dem ersten Granulierkopf kein Spielraum mehr nach oben gegeben, so dass nur durch Umschalten auf den nächsten Granulator die richtige Granulatgröße beibehalten bzw. wieder erreicht werden kann, kann das Anfahrventil auf den größeren Granulierkopf umgeschalten werden. Alternativ oder zusätzlich kann dieses Umschalten dann vorgenommen werden, wenn der Massedruck der Schmelze über einen entsprechenden Grenzwert steigt. Beim Steigern von Durchsatzleistungen steigt üblicherweise auch der Kopfdruck, was bei einigen Produkten restriktiv sein kann, da eine Schädigung durch Scherung aufgrund des Drucks entstehen kann. Als Konsequenz hieraus kann auch die Massetemperatur der Schmelze zu stark ansteigen, wodurch ähnliche Folgen auftreten. Auch hier kann ein Umschalten Abhilfe schaffen. Bei Berücksichtigung der Granulatform kann z. B. eine kritische Deformierung des Granulats als Kriterium verwendet werden, welche bei Steigerung des Volumenstroms pro Bohrung entsteht. Je nach Sensibilität des produzierten Materials und Anforderungen an die Granulatqualität kann auch hier ein Umschalten auf den größeren Granulierkopf helfen. Aus der Granulatgröße lassen sich zudem noch andere sekundäre Umschaltnotwendigkeiten ableiten, die aber letztlich mit der Korngröße des Granulats korreliert sind, nämlich die Oberflächenklebrigkeit, die Agglomeration, Doppelkorn, unterschiedliche Kristallisationseffekte aufgrund unterschiedlicher Größe und Temperatur der Granulate und dergleichen.

Um mit möglichst wenigen Granulierköpfen ein möglichst breites Durchsatz- und damit Betriebsfenster zu erreichen, gleichzeitig jedoch ein möglichst störungsfreies Umstellen der Schmelzebearbeitung von dem einen Granulierkopf auf den anderen Granulierkopf sicherzustellen, besitzen die an das Anfahrventil angeschlossenen Granulierköpfe einander ergänzende, vorzugsweise nahtlos aneinander anschließende Durchsatzkapazitätsbereiche. Gegebenenfalls könnten sich die Kapazitätsbereiche auch überlappen, wobei zur Erhöhung des Durchsatzfensters insgesamt jedoch gleichwohl gilt, dass der von beiden Granulierköpfen definierte Durchsatzkapazitätsbereich größer ist als der nur eines Granulierkopfes. Durch eine Ausbildung der Granulierköpfe dahingehend, dass ihre Kapazitätsbereiche nahtlos aneinander anschließen, kann eine maximale Ausnutzung eines jeden Kapazitätsbereichs erreicht werden. Beispielsweise kann bei Ausbildung der Granuliervorrichtung zur Granulierung für PET ein erster Granulierkopf mit einer Durchsatzleistungsspanne von 2500 kg/h bis 4500 kg/h, ein zweiter Granulierkopf mit einer Durchsatzkapazität von 4500 kg/h bis 7500 kg/h, sowie ein dritter Granulierkopf mit einer Durchsatzkapazität von 7500 kg/h bis 12.500 kg/h verwendet werden. Es versteht sich, dass die Kapazitätsgrenzen anders gewählt sein können, wobei sie sich jedoch in entsprechender Weise vorteilhafterweise nahtlos ergänzen.

Grundsätzlich können die Granulierköpfe für verschiedene Granulierprozesse ausgebildet sein. Nach einer vorteilhaften Ausführung der Erfindung können die Granulierköpfe Unterwassergranulierköpfe bilden. Alternativ könnten die Granulierköpfe auch Stranggranulierköpfe oder Wasserringgranulierköpfe bilden.

In vorteilhafter Weiterbildung der Erfindung sind sämtliche Granulierköpfe vom selben Typ, beispielsweise Unterwassergranulierköpfe.

In alternativer Ausbildung der Erfindung können jedoch die Granulierköpfe auch verschiedene Granulierarten realisieren, beispielsweise kann der Granulierkopf mit kleinerer Durchsatzkapazität ein Unterwassergranulierkopf sein, während der Granulierkopf mit größerer Durchsatzleistung ein Stranggranulierkopf ist.

Das Anfahrventil ist vorteilhafterweise derart ausgebildet, dass ein möglichst schnelles und unterbrechungsfreies Umleiten des Schmelzestroms von einem Granulierkopf auf den nächsten Granulierkopf ermöglicht wird.

Vorzugsweise besitzt das bidirektional betreibbare Anfahrventil für verschiedene Prozessstufen verschiedene Strömungswege für die Schmelze, so dass das Anfahrventil für eine erste Prozessstufe mit einem ersten Strömungsweg und wahlweise für eine zweite Prozessstufe über einen zweiten Strömungsweg betreibbar ist. Es kann die Schmelze wahlweise über einen ersten oder einen zweiten Granulatoranschluss ausgeben. Der jeweils andere, nicht betriebene Strömungsweg bzw. Granulatoranschluss kann zeitgleich zur Produktion über den in Betrieb befindlichen Strömungsweg gereinigt werden, so dass die hierdurch anfallenden Totzeiten entfallen. Trotzdem bleibt der nicht in Betrieb befindliche Strömungsweg bzw. Granulatoranschluss auf Temperatur, da die von der Schmelze eingebrachte Wärme selbstverständlich auch den nicht betriebenen Teil des Anfahrventils aufheizt.

Nach einer vorteilhaften Ausführung der vorliegenden Erfindung kann das Anfahrventil die mehreren Produktionswege von nur einem Schmelzeerzeugeranschluss ausgehend verwirklichen. Nach dieser Ausführung der Erfindung besitzt das Anfahrventil neben dem ersten Granulatoranschluss einen zweiten Granulatoranschluss, der mit demselben Schmelzeerzeugeranschluss verbindbar ist wie der erste Granulatoranschluss. Um den Schmelzefluss wahlweise über den ersten Granulatoranschluss oder den zweiten Granulatoranschluss austreten lassen zu können, besitzt das Anfahrventil eine Schaltweiche, die in einer ersten Produktionsstellung den Schmelzeerzeugeranschluss mit dem ersten Granulatoranschluss und in einer zweiten Produktionsstellung den genannten Schmelzeerzeugeranschluss mit dem zweiten Granulatoranschluss verbindet.

Hierdurch kann die Polymerschmelze schnell auf eine der beiden an den Granulatoranschlüssen montierten Düsengeometrien umgelenkt werden. Die jeweils andere Düsengeometrie ist sozusagen im Stand-By und wird nicht benutzt. Durch Betätigung der Schaltweiche kann in Sekunden zwischen den beiden möglichen Produktionsrichtungen umgeschaltet werden.

In Weiterbildung der Erfindung kann in dem Schmelzekanal, der den Schmelzeerzeugeranschluss wahlweise mit einem der beiden Granulatoranschlüsse verbindet, eine Anfahrweiche vorgesehen sein, die in ihrer Produktionsstellung den Schmelzekanal zu dem jeweiligen Granulatoranschluss hindurchschaltet, während sie in ihrer Anfahrstellung den Schmelzefluss umlenkt und auf eine Bypassöffnung gibt.

Die vorgenannte Schaltweiche zum Umschalten zwischen den Produktionsrichtungen und die Anfahrweiche für den Aufstartvorgang können grundsätzlich separat voneinander ausgebildet sein. In Weiterbildung der Erfindung jedoch sind sie miteinander gekoppelt, insbesondere von einem gemeinsamen Ventilkorpus gebildet, und von einem gemeinsamen Ventilaktor betätigbar.

In Weiterbildung der Erfindung kann das Anfahrventil neben den ersten und zweiten Granulatoranschlüssen auch noch einen dritten oder weiteren Granulatoranschluss besitzen, der mit dem Schmelzekanal verbindbar ist. Die Schaltweiche ist hierbei vorzugsweise derart ausgebildet, dass sie in einer dritten Produktionsstellung den dritten Granulatoranschluss mit dem Schmelzeerzeugeranschluss verbindet. Dementsprechend kann das Anfahrventil sogar zwischen mehr als zwei Produktionsrichtungen umschalten.

Nach einem Aspekt der vorliegenden Erfindung besitzt das Anfahrventil einen von dem ersten Produktionsweg vollständig separat ausgebildeten zweiten Produktionsweg. Zusätzlich zu dem ersten Schmelzeerzeugeranschluss, dem ersten Granulatoranschluss und dem ersten Schmelzekanal zur Verbindung der genannten ersten Schmelzeerzeuger- und Granulatoranschlüsse besitzt das Ventil nach dieser Ausführung einen zweiten Granulatoranschluss sowie einen zweiten Schmelzeerzeugeranschluss, die durch einen zweiten Schmelzekanal miteinander verbindbar sind. Bei dieser Option kann der Wechsel von einem ersten Produktionsprozess auf einen zweiten Produktionsprozess vorteilhafterweise besonders schnell dadurch erfolgen, dass die zunächst verwendeten Schmelze- und Granulatoranschlüsse mittels Schnellverschlusskupplungen gelöst werden und nach minimalem mechanischen Umbau und einer entsprechenden Drehung des Anfahrventiles selbst das Anfahrventil mit den zweiten Schmelze- und Granulatoranschlüssen und entsprechender Schnellkupplungen wieder zwischen dem Schmelzeerzeuger und dem Granulator montiert wird. Der zweite Schmelzekanal ist einerseits in gereinigtem Zustand und andererseits durch den vorangehenden Produktionsprozess bereits vorgewärmt, so dass der neue Produktionsprozess rasch gestartet werden kann.

Dabei ist in dem genannten ersten Schmelzekanal und in dem genannten zweiten Schmelzekanal eine Anfahrweiche vorgesehen, die in einer Produktionsstellung den jeweiligen Schmelzekanal durchschaltet, so dass der Schmelzefluss von der Einlassöffnung des jeweiligen Schmelzeerzeugeranschlusses zu der Auslassöffnung des zugehörigen Granulatoranschlusses strömen kann, und in einer Anfahrstellung den Schmelzefluss umleitet, d. h. den jeweiligen Granulatoranschluss absperrt und den Schmelzefluss zu einer Bypassöffnung leitet, so dass in an sich bekannter Weise der Aufstartvorgang für den neuen Produktionsprozess erfolgen kann.

Dabei sind die Anfahrweiche des ersten Schmelzekanals und die Anfahrweiche des zweiten Schmelzekanals vorteilhafterweise in einem gemeinsamen Ventilorgan realisiert und von einem gemeinsamen Ventilaktor betätigbar. Hierdurch ist nur eine Steuerungsmimik für das Umschalten von Anfahrstellung auf Produktionsstellung von beiden Produktionswegen erforderlich. Es können gegenüber der Verwendung zweier separater Anfahrventile die entsprechenden Bauteile wie Ventilaktor, Steuerungselektronik etc. eingespart werden, so dass sich diese Lösung durch ihre Kosteneffizienz auszeichnet.

In dem Ventilorgan können Durchschaltkanäle sowohl für den ersten Schmelzekanal als auch für den zweiten Schmelzekanal und entsprechende Bypasskanäle zur Umleitung des Schmelzeflusses des ersten Schmelzekanals und des Schmelzeflusses des zweiten Schmelzekanals jeweils zu einer Bypassöffnung vorgesehen sein.

Die von dem Ventilorgan gebildeten Anfahrweichen sind vorteilhafterweise derart ausgebildet, dass beide Anfahrweichen gleichzeitig in ihrer Produktionsstellung und gleichzeitig in ihrer Anfahrstellung sind. Hierdurch können dann, wenn beide Produktionswege des Anfahrventils gleichzeitig genützt werden, die entsprechenden Produktionsprozesse gleichzeitig angefahren werden. Wird nur einer der beiden Produktionswege des Anfahrventils genutzt, ist der nicht genutzte Produktionsweg durchgängig geöffnet, so dass er vollständig gereinigt werden kann, während der andere Produktionsweg genutzt wird.

Die Erfindung wird nachfolgend anhand bevorzugter Ausführungsbeispiele und zugehöriger Zeichnungen näher erläutert. In den Zeichnungen zeigen:

Figur 1:            eine perspektivische Gesamtansicht eines Anfahrventils mit zwei Schmelzeerzeugeranschlüssen mit entsprechenden Einlassöffnungen und zwei Granulatoranschlüssen mit entsprechenden Auslassöffnungen,

Figur 2:            eine Seitenansicht des Anfahrventils aus Figur 1, die eine Draufsicht auf einen der Schmelzeerzeugeranschlüsse zeigt,

Figur 3:            eine Seitenansicht des Anfahrventils aus Figur 1, die eine Draufsicht auf einen der Granulatoranschlüsse zeigt,

Figur 4:            einen Schnitt entlang der Linie C-C in Figur 3,

Figur 5:            einen Schnitt entlang der Linie D-D in Figur 2,

Figur 6:            einen Schnitt entlang der Linie B-B in Figur 2,

Figur 7:            einen Schnitt entlang der Linie A-A in Figur 3,

| Figur 8 bis Figur 13: | Seiten- und Schnittansichten des Anfahrventils aus Figur 1 entsprechend den Figuren 2 bis 7, wobei das Anfahrventil in den Figuren 8 bis 13 mit seiner Anfahrweiche nicht in Produktionsstellung, sondern in der Bypass-bzw. Anfahrstellung gezeigt ist, in der die Schmelze nicht zu den Granulatoranschlüssen, sondern auf den Boden geleitet wird, |
|---|---|
| Figur 14: | eine Seitenansicht eines Anfahrventils mit zwei Granulatoranschlüssen, jedoch nur einem Schmelzeerzeugeranschluss, wobei die Seitenansicht eine Draufsicht auf einen der beiden Granulatoranschlüsse zeigt, |
| Figur 15: | einen Schnitt entlang der Linie A-A in Figur 14, der die Anfahr- und Schaltweiche des Ventils in ihrer Bypassstellung zeigt, in der der Schmelzeerzeugeranschluss mit keinem der beiden Granulatoranschlüsse verbunden ist, sondern mit einer Bypassöffnung, |
| Figur 16: | einen Schnitt des Anfahrventils aus Figur 14 ähnlich Figur 15, wobei jedoch die Schalt- und Anfahrweiche in einer ersten Produktionsstellung gezeigt ist, in der der Schmelzeerzeugeranschluss mit einem ersten Granulatoranschluss verbunden ist, |
| Figur 17: | einen Schnitt des Anfahrventils aus Figur 14 ähnlich den Figuren 15 und 16, wobei jedoch die Schalt- und Anfahrweiche in einer zweiten Produktionsstellung gezeigt ist, in der der Schmelzeerzeugeranschluss mit dem zweiten Granulatoranschluss in Verbindung steht, |
| Figur 18: | eine schematische Darstellung einer Unterwassergranuliervorrichtung mit einem Anfahrventil nach den Figuren 14 bis 17, an das zwei Granulierköpfe mit unterschiedlichen Durchsatzkapazitäten angeschlossen sind, |
| Figur 19: | eine ausschnittsweise vergrößerte Darstellung des Anfahrventils der Granuliervorrichtung aus Figur 18, wobei in der Ansicht a) die Anfahrstellung des Ventils und in der Darstellung b) eine der beiden Produktionsstellungen des Anfahrventils gezeigt ist, |
| Figur 20: | eine schematische Darstellung der durch das Anfahrventil aus den vorhergehenden Figuren einstellbaren Schmelzeströme und Granulierkapazitäten, und |
| Figur 21: | eine schematische Darstellung eines Anfahrventils nach einer alternativen Ausführung der Erfindung, bei dem drei Granulierköpfe mit jeweils verschiedener Durchsatzkapazität angeschlossen sind, so dass die in den Einlass des Anfahrventils eintretende Schmelze wahlweise an eine der drei Granulierköpfe oder eine Bypassleitung geleitet werden kann. |

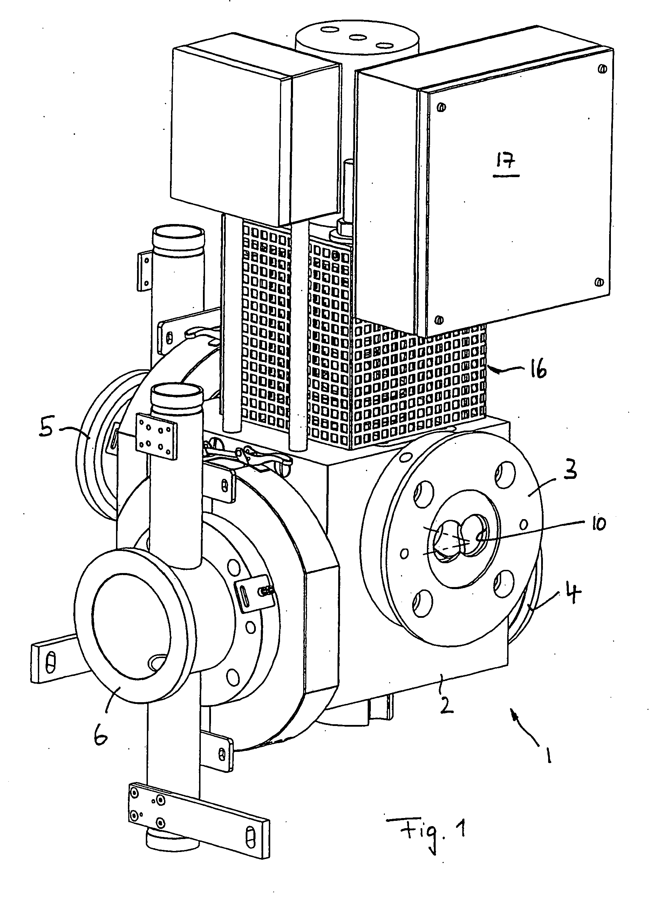

Das in Figur 1 gezeigte Anfahrventil 1 besitzt ein Ventilgehäuse 2, an dessen Außenseite ein erster Schmelzeerzeugeranschluss 3 sowie ein zweiter Schmelzeerzeugeranschluss 4, sowie weiterhin ein erster Granulatoranschluss 5 und ein zweiter Granulatoranschluss 6 vorgesehen sind. Wie Figur 1 zeigt, sind die Anschlüsse 3 bis 6 über den Umfang des Ventilgehäuses 4 verteilt und auf jeweils gegenüberliegenden Seiten angeordnet. Der erste Schmelzeerzeugeranschluss 3 liegt dem ersten Granulatoranschluss 5 gegenüber, während der zweite Schmelzeerzeugeranschluss 4 dem zweiten Granulatoranschluss 6 gegenüberliegt.

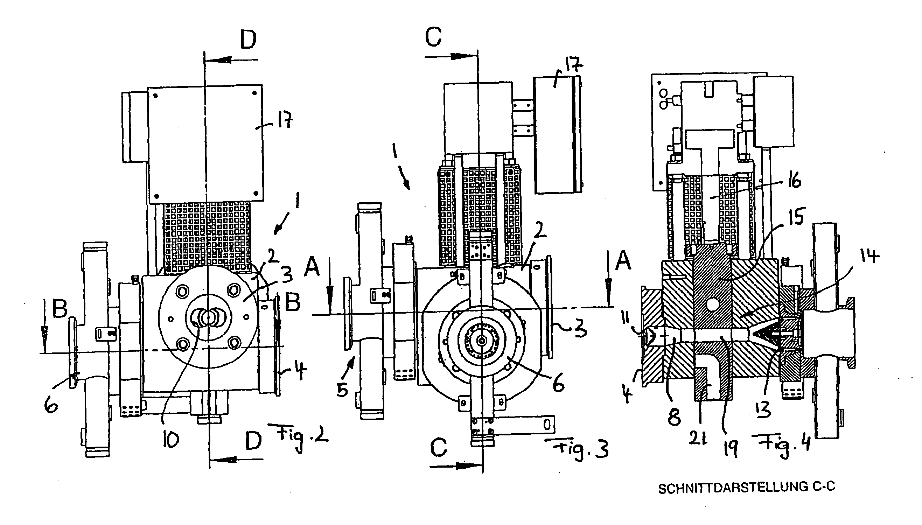

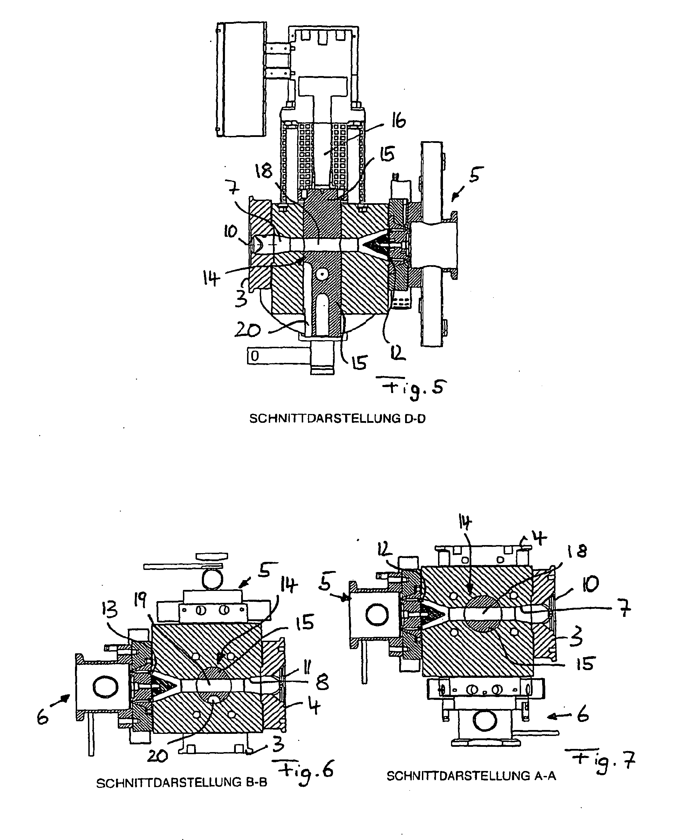

Die Schmelzeerzeuger- und Granulatoranschlüsse sind miteinander in Strömungsverbindung bringbar. Hierzu ist im Inneren des Ventilgehäuses 2 ein erster Schmelzekanal 7 (vgl. Figuren 1 und 5), durch den der erste Schmelzeerzeugeranschluss 3 mit dem ersten Granulatoranschluss 5 verbindbar ist, sowie ein zweiter Schmelzekanal 8 (vgl. Figuren 4 und 6), durch den der zweite Schmelzeerzeugeranschluss 4 mit dem zweiten Granulatoranschluss 6 verbindbar ist, vorgesehen. Die Schmelzekanäle 7 und 8 kommunizieren hierbei mit entsprechenden Einlassöffnungen 10 und 11 an den beiden Schmelzeerzeugeranschlüssen 3 und 4 sowie mit entsprechenden Auslassöffnungen 12 und 13 an den Granulatoranschlüssen 5 und 6.

Die beiden Schmelzekanäle 7 und 8 mit dem jeweils zugehörigen ersten Schmelzeerzeuger- und Granulatoranschlüssen 3 und 5 bzw. den zweiten Schmelzeerzeuger- und Granulatoranschlüssen 4 und 6 bilden voneinander unabhängige und separat betreibbare Produktionsrichtungen. Der Strömungsweg für die Schmelze durch den einen Schmelzekanal besitzt keine Überlappung mit dem Strömungsweg durch den zweiten Schmelzekanal. Die beiden Schmelzekanäle sind lediglich insofern miteinander verknüpft, als dass ein gemeinsames Anfahrventil für beide Schmelzekanäle vorgesehen ist, wie noch erläutert wird. Wie die Figuren 1, 2 und 3 zeigen, sind die zusammengehörigen ersten Schmelzeerzeuger- und Granulatoranschlüsse 3 und 5 zusammen mit dem sie verbindenden ersten Schmelzekanal 7 gegenüber den ebenfalls zusammengehörigen zweiten Schmelzeerzeuger- und Granulatoranschlüssen 4 und 6 und dem zugehörigen zweiten Schmelzekanal 8 höhenversetzt. Der erste Schmelzekanal 7 zwischen den ersten Schmelzeerzeuger- und Granulatoranschlüssen 3 und 5 geht oberhalb des zweiten Schmelzekanals 8 zwischen den zweiten Schmelzeerzeuger- und Granulatoranschlüssen 4 und 6 über diesen hinweg. Es versteht sich, dass hier auch andere Anordnungen möglich sind, z. B. könnten die vier Anschlüsse 3-6 grundsätzlich auf demselben Höhenniveau angeordnet sein und die Schmelzekanäle beispielsweise durch einen bogenförmigen Verlauf über einander hinweggehen. Die in den Figuren gezeigte Ausführung zeichnet sich jedoch aufgrund des geraden Verlaufs der Schmelzekanäle 7 und 8 durch ihre einfache Herstellbarkeit aus.

Im Inneren des Ventilgehäuses bzw. -korpus 2 ist eine Anfahrweiche 14 vorgesehen, die beiden Schmelzekanälen 7 und 8 zugeordnet ist und den Schmelzefluss in jedem der Schmelzekanäle 7 und 8 für den Aufstartvorgang auf eine Bypassöffnung umlenken kann. Die Anfahrweiche 14 besteht in der gezeichneten Ausführung aus einem im wesentlichen zylindrischen Ventilschieber 15, der in einer in der gezeichneten Ausführung vertikal verlaufenden Ventilbohrung längsverschieblich aufgenommen ist, die sich quer zu den Längsachsen der Schmelzekanäle 7 und 8 erstreckt. Es versteht sich, dass der Ventilschieber 15 gegebenenfalls auch als Drehschieber ausgebildet sein könnte, der nicht durch axiale Längsverschiebung, sondern durch Rotation um seine Längsachse betätigt wird. Weitere Ventilprinzipien sind möglich.

Wie die Figuren 1 bis 5 zeigen, wird der Ventilschieber 15 von einem Ventilaktor 16 betätigt, der auf der Oberseite des Ventilgehäuses 2 angeordnet ist und von einer elektronischen Steuereinheit 17 angesteuert wird. Der Ventilaktor 16 kann verschiedene Wirkprinzipien verwirklichen, z. B. elektromagnetisch oder hydraulisch bzw. pneumatisch arbeiten. Er bewirkt die Verstellung des Ventilschiebers 15 zwischen dessen Produktionsstellung und dessen Anfahr- bzw. Bypassstellung.

In der in den Figuren 5 bis 7 gezeigten Produktionsstellung des Ventilschiebers 15 schaltet dieser die beiden Schmelzekanäle 7 und 8 durch, d. h. der an den jeweiligen Einlassöffnungen 10 bzw. 11 eintretende Schmelzefluss an den Schmelzeerzeugeranschlüssen 3 und 4 wird durch die Schmelzekanäle 7 bzw. 8 über den Ventilschieber 15 hinweg zu den zugehörigen Auslassöffnungen 12 bzw. 13 der Granulatoranschlüsse 5 und 6 geleitet. Wie die Figuren 4 bis 7 zeigen, münden die Schmelzekanäle 7 und 8 jeweils auf die Ventilbohrung, in die der Ventilschieber 15 eingesetzt ist. In dem Ventilschieber 15 sind zwei Produktionskanäle 18 und 19 vorgesehen, die bei der in den Figuren 5 bis 7 gezeigten Stellung des Ventilschiebers 16 die Schmelzekanäle 7 und 8 sozusagen fortsetzen.

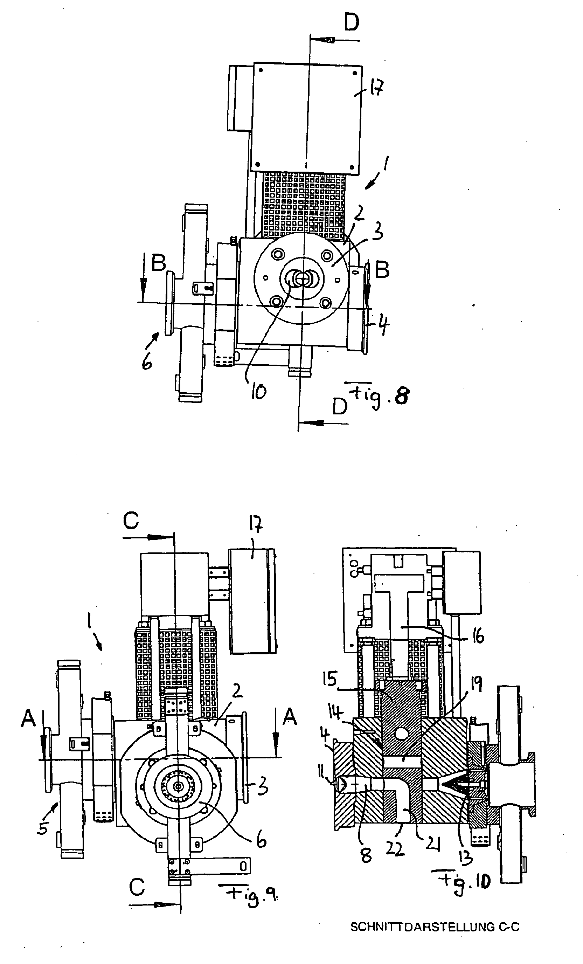

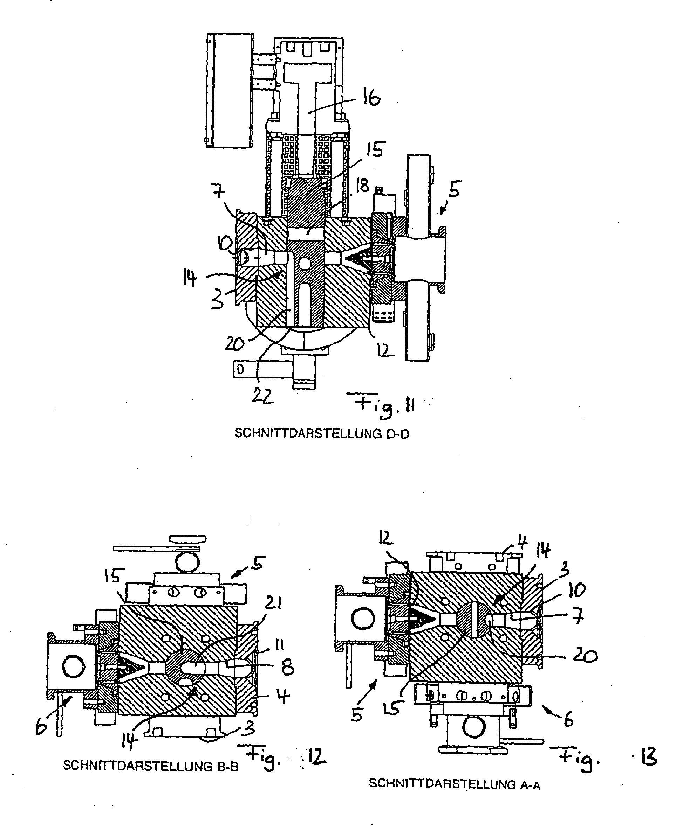

Wird der Ventilschieber 15 mit Hilfe des Ventilaktors 16 aus der in den Figuren 5 bis 7 gezeigten Produktionsstellung in die in den Figuren 8 bis 13 gezeigte Anfahrstellung bewegt, blockiert der Ventilschieber 15 die Verbindung der Einlassöffnungen 10 und 11 an den Schmelzeerzeugeranschlüssen 3 und 4 mit den Auslassöffnungen 12 und 13 an den Granulatoranschlüssen 5 und 6. Den an der Einlassöffnung 10 und oder der Einlassöffnung 11 eintretenden Schmelzestrom leitet der Ventilschieber 15 zu einer Bypassöffnung um, so dass der Schmelzestrom beim Anfahren auf den Boden geleitet wird. Der Ventilschieber 15 besitzt hierzu zwei Bypasskanäle 20 und 21, die in der in den Figuren 9 bis 14 gezeigten Anfahrstellung des Ventilschiebers 15 mit den Schmelzekanälen 7 und 8, genauer gesagt deren von den Einlassöffnungen 10 und 11 her kommenden Abschnitten, in Strömungsverbindung stehen und sozusagen den von dort her kommenden Schmelzefluss abgreifen. Andererseits münden die beiden Bypasskanäle 20 und 21 in Bypassaustrittsöffnungen in der Stirnseite des Ventilschiebers 15, der mit seiner unteren Stirnseite mit der Außenseite des Ventilgehäuses 2 in Verbindung steht.

Für das in den Figuren 1 bis 13 gezeigte Anfahrventil 1 bieten sich besonders zwei Verwendungsmöglichkeiten an. Zum Einen kann das Anfahrventil 1 mit nur jeweils einem der Schmelzeerzeugeranschlüsse 3 und 4 und nur einem der Granulatoranschlüsse 5 und 6 zu einem definierten Zeitpunkt benutzt werden. Es wird also nur eine der beiden Produktionsrichtungen genutzt, während die andere Produktionsrichtung, d. h. das andere Paar von Schmelzeerzeuger- und Granulatoranschlüssen unbenutzt bleibt und sozusagen auf Stand-By gehalten wird. Soll der entsprechend laufende Produktionsprozess unterbrochen und ein neuer Produktionsprozess gestartet werden, wird das Anfahrventil über Schnellverschlusskupplungen von dem jeweiligen Schmelzeerzeuger und Granulator gelöst. Das Ventil wird um 90 ° gedreht und sodann mit den zuvor unbenutzten Schmelzeerzeuger- und Granulatoranschlüssen an den Schmelzeerzeuger und den Granulator für den zu startenden Produktionsprozess montiert. Dieser neue Produktionsprozess kann in an sich bekannter Weise gestartet werden, indem zunächst die Anfahrweiche 14 auf ihre Anfahrstellung gemäß den Figuren 8 bis 13 gefahren wird, so dass die Schmelze während des Aufstartvorganges auf den Boden tropft. Ist die Anlage angefahren, wird die Anfahrweise 14 in ihre Produktionsstellung gemäß den Figuren 2 bis 7 gebracht, so dass der neue Schmelzestrom von dem Granulator über die Anfahrweiche hinweg zu dem angeschlossenen Granulator geführt wird. Hierdurch werden die Umrüstzeiten minimiert. Vor allen Dingen wird die Zeit für die Reinigung des Anfahrventils eingespart. Die Reinigung des zuvor benutzten Produktionskanals kann erfolgen, nachdem das Ventil mit dem frischen Produktionskanal angeschlossen wurde und der neue Produktionsprozess bereits läuft. Vorteilhaft ist zudem, dass sich das Anfahrventil bereits zumindest annähernd auf Betriebstemperatur befindet, da es noch durch den zuvor abgebrochenen Produktionsprozess aufgeheizt war.

Andererseits bietet das oben beschriebene Anfahrventil 1 auch die Option, beide Produktionskanäle gleichzeitig zu benutzen, d. h. beide Schmelzeerzeugeranschlüsse 3 und 4 an einen oder mehrere Schmelzeerzeuger anzuschließen und ebenso die beiden Granulatoranschlüsse 5 und 6 an zwei Granulatoren gleichzeitig anzuschließen. Die zuvor beschriebene Ausbildung der Anfahrweiche 14 stellt dabei sicher, dass zunächst beide Produktionskanäle auf Anfahrstellung geschaltet sind, d. h. beide Prozesse angefahren werden können. Sobald beide Prozesse angefahren sind, kann die Anfahrweiche 14 umgeschalten werden, um beide Produktionsprozesse zu starten.

Vorteilhafterweise bietet das Anfahrventil 1, unabhängig davon, ob die Produktionsprozesse nacheinander oder gleichzeitig gefahren werden, die Möglichkeit, zwei gleiche, aber auch zwei völlig verschiedene Produktionsprozesse zu fahren. So kann über die ersten Schmelzeerzeuger- und Granulatorenanschlüsse 3 und 5 und über die zweiten Schmelzeerzeuger- und Granulatoranschlüsse 4 und 6 jeweils gleiche Granulierverfahren wie Stranggranulierung oder Unterwassergranulierung, aber auch unterschiedliche Granulierverfahren, d. h. aus dem einen eine Stranggranulierung und auf dem anderen eine Unterwassergranulierung gefahren werden. Hierbei können die jeweils notwendigen Düsenplatten benutzt werden, die entweder gleiche Profilgeometrie und Bohrungsanzahl, gleiche Profilgeometrie und unterschiedliche Bohrungsanzahl, unterschiedliche Profilgeometrie und gleiche Bohrungsanzahl oder sowohl unterschiedliche Profilgeometrie als auch unterschiedliche Bohrungsanzahl aufweisen können, oder auch eine dieser möglichen Kombinationen in verschiedenen Baugrößen verwirklichen können.

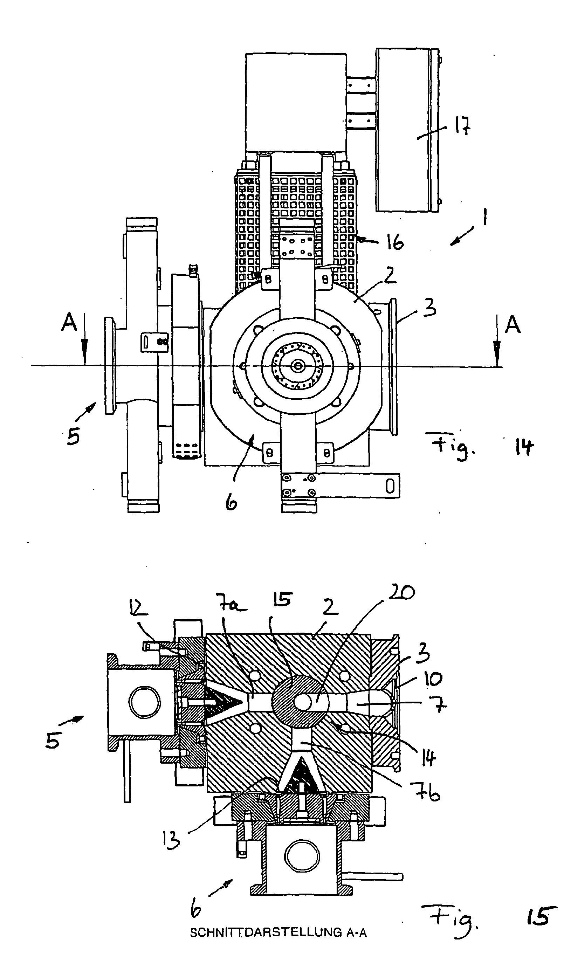

Die zweite Ausführungsform des Anfahrventils 1 gemäß den Figuren 14 bis 17 unterscheidet sich von der zuvor beschriebenen ersten Ausführungsform im wesentlichen dadurch, dass das Anfahrventil anstelle von zwei Schmelzeerzeugeranschlüssen lediglich einen Schmelzeerzeugeranschluss 3 aufweist, der wahlweise mit dem ersten Granulatoranschluss 5 oder dem zweiten Granulatoranschluss 6 verbindbar ist, bzw. in der Anfahrstellung des Ventils mit der Bypassöffnung verbunden werden kann. Soweit das Anfahrventil 1 gemäß den Figuren 14 bis 17 mit der zuvor beschriebenen Ausführung übereinstimmt, sind selbe Bauteile mit selben Bezugsziffern versehen und es wird insoweit auf die vorherige Beschreibung verwiesen.

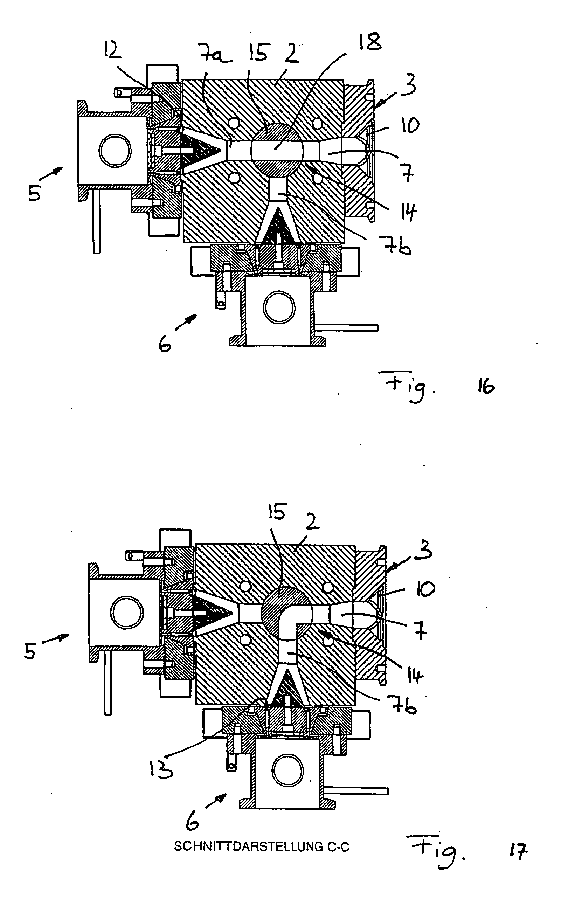

Wie die Figuren 14 und 15 zeigen, sind bei dieser Ausführungsform der Schmelzeerzeugeranschluss 3 sowie die beiden Granulatoranschlüsse 5 und 6 auf derselben Höhe angeordnet (vgl. Figur 14) und stehen mit jeweils einem Schmelzekanal 7, 7a und 7b in Verbindung, die von der Einlassöffnung 10 bzw. den Auslassöffnungen 12 und 13 jeweils radial nach Innen verlaufen und alle drei in der Ventilbohrung münden, in der der Ventilschieber 15 aufgenommen ist. Der Ventilschieber 15 der Anfahrweiche 14 ist in der zuvor beschriebenen Weise axial verstellbar. Er umfasst zwei Produktionskanäle 18 und 19 (vgl. Figuren 16 und 17). In der ersten Produktionsstellung des Ventilschieber 15, die Figur 16 zeigt, schaltet die Anfahrweiche 14 die Einlassöffnung 10 des Schmelzeerzeugeranschlusses 3 auf die Auslassöffnung 12 des ersten Granulatoranschlusses 5 durch. Der erste Produktionskanal 18 setzt den von dem Schmelzeerzeugeranschluss 3 her kommenden Schmelzekanal 7 zu dem mit dem ersten Granulatoranschluss 5 in Verbindung stehenden Abschnitt 7a des Schmelzekanals fort, so dass der Schmelzefluss, der über die Einlassöffnung 10 eintritt, zu dem an dem ersten Granulatoranschluss 5 montierten Granulator gelangt.

Wird der Ventilschieber 15 in seine zweite Produktionsstellung bewegt, die Figur 17 zeigt, schaltet die Anfahrweiche 14 den ersten Schmelzeerzeugeranschluss 3 auf den zweiten Granulatoranschluss 6 durch. Der zweite Produktionskanal 19 in dem Ventilschieber 15 setzt den von der Einlassöffnung 10 her kommenden Schmelzekanal 7 zu dem mit dem zweiten Granulatoranschluss 6 in Verbindung stehenden Abschnitts 7b des Schmelzekanals fort, so dass die über die Einlassöffnung 10 eintretende Schmelze zu dem Granulator gelangen kann, der an dem zweiten Granulatoranschluss 6 angeschlossen ist.

Weiterhin kann der Ventilschieber 15 in eine Anfahr- bzw. Bypassstellung gefahren werden, die Figur 15 zeigt. In dieser Stellung sperrt der Ventilschieber 15 beide Granulatoranschlüsse 5 und 6 ab und lenkt den über die Einlassöffnung 10 eintretenden Schmelzefluss über den Bypasskanal 20, der in dem Ventilschieber 15 ausgebildet ist, zu einer Bypassöffnung um, die stirnseitig am unteren Ende des Ventilschiebers 15 vorgesehen ist. Über diese Bypassöffnung kann beim Anfahren der Anlage in der zuvor beschriebenen Weise die Schmelze auf den Boden gelenkt werden.

Bei dieser zweiten Ausführungsform des Anfahrventils 1 wird also zu einem definierten Zeitpunkt über einen gemeinsamen Einlass jeweils nur eine der beiden Auslassöffnungen 12 und 13 bedient. Die über die Einlassöffnung 10 eintretende Polymerschmelze wird auf einen der Granulatoranschlüsse umgelenkt, während der jeweils andere im Stand-By ist und daher nicht benutzt wird. Das Umschalten kann in Sekundenschnelle durch Betätigung der Anfahrweiche 14 erfolgen.

Bei einfachen Prozessen könnte die Anfahrweiche 14 auch lediglich ihre beiden Produktionsstellungen besitzen, auf die Bypassposition und den entsprechenden Bypasskanal 20 jedoch verzichten. Hierbei könnte dann die sogenannte Anfahr- oder Aufstartware auf dem dann kleineren Granulator in Granulat umgeformt werden, wodurch die ansonsten üblichen großen Anfahrplätze völlig entfallen würden.

Insbesondere kann die zweite Ausführungsform des Anfahrventils 1 ihren Einsatz dort finden, wo komplexe Anlagen mit möglichst kleinen Geräten und auf engstem Raum betrieben werden sollen. Die Umschaltmöglichkeit während des Betriebs ermöglicht es, Unterbrechungen weitestgehend zu vermeiden bzw. durch geschickte Auswahl der beiden Granulierköpfe ein sehr breites Durchsatzverarbeitungsfenster auf einer Produktionsmaschine zu realisieren.

Auch bei dieser Ausführungsform des Anfahrventils 1 können über die beiden Granulatoranschlüsse 5 und 6 zwei gleiche Granulierverfahren, also beispielsweise an beiden Granulatoranschlüssen 5 und 6 Stranggranulierungen oder an beiden Anschlüssen auch Unterwassergranulierungen gefahren werden. Es können aber auch unterschiedliche Granulierverfahren, z. B. an dem einen Granulatoranschluss eine Stranggranulierung und an dem anderen Granulatoranschluss eine Unterwassergranulierung gefahren werden. In jedem Fall können an den beiden Granulatoranschlüssen 5 und 6 Düsenplatten benutzt werden, die eine gleiche Profilgeometrie und Bohrungsanzahl, eine gleiche Profilgeometrie bei unterschiedlicher Bohrungsanzahl, eine unterschiedliche Profilgeometrie bei gleicher Bohrungsanzahl oder eine unterschiedlicher Bohrungsanzahl besitzen. Es versteht sich, dass auch hier bei jeder dieser Möglichkeiten Düsenplatten in unterschiedlichen Baugrößen Verwendung finden können.

Insbesondere bei Verwendung von unterschiedlichen Granulatorbaugrößen an den beiden Granulatoranschlüssen 5 und 6 ergeben sich interessante Einsatzmöglichkeiten. So kann z. B. durch unterschiedliche Düsenplatten das mit einer Maschine erreichbare Volumenstromfenster beträchtlich vergrößert werden. Zudem kann die Verlustmenge pro Aufstartvorgang beträchtlich reduziert werden, wodurch zum Einen insgesamt weniger Materialverluste entstehen, die dann entsorgt oder aufbereitet werden müssen und zum Anderen ein schnelleres Starten erreicht wird, was weniger Personalaufwand und insgesamt weniger Handling bedeutet.

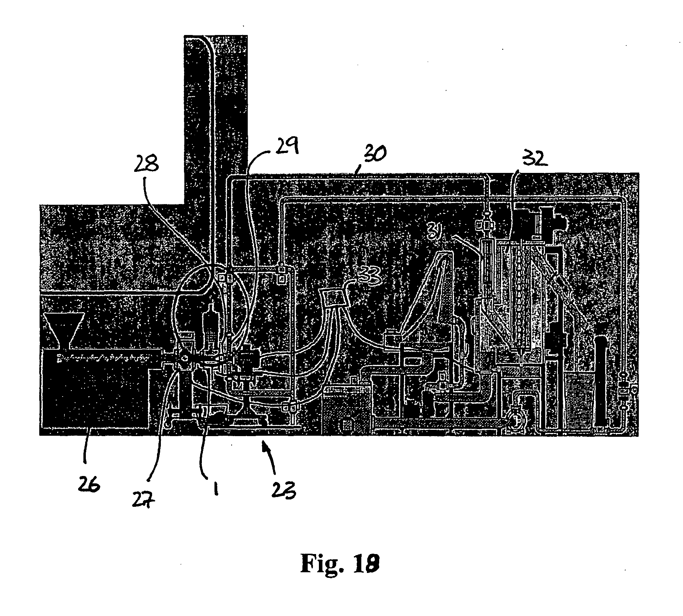

In besonders vorteilhafter Weise wird das beschriebene Anfahrventil 1 gemäß den Figuren 14 bis 17 in einer Unterwassergranuliervorrichtung 23 verwendet, wie sie in Figur 18 gezeigt ist, wobei an die beiden Granulatoranschlüsse 5 und 6 vorteilhafterweise Granulierköpfe 24 und 25 mit unterschiedlichen Durchsatzkapazitäten angeschlossen sind. Wie Figur 18 zeigt, wird die durch einen Extruder 26 und/oder eine Zahnradpumpe 27 horizontal zugeführte Schmelze über das Anfahrventil 1 durch die radial angeordneten Bohrungen der Düsenplatte 28 eines der beiden Granulierköpfe 24 bzw. 25 gepresst. In der vollständig gefluteten Schneidkammer werden die Stränge direkt bei Austritt aus der genannten Düsenplatte 28 zu Granulat geschnitten und durch den Wasserstrom 29 abtransportiert, wobei durch den hohen Temperaturunterschied zum Prozesswasser die Schmelze blitzartig erstarrt, so dass in Abhängigkeit von der Viskosität die für die Unterwassergranulierung charakteristische Kugelform des Granulats entsteht. Wie Figur 18 verdeutlicht, wird das aus der Schneidkammer des jeweiligen Granulierkopfs 24 bzw. 25 austretende Granulat-/Wassergemisch mittels einer Transportleitung 30 einem Agglomeratfänger 31 zugeführt, der einem Zentrifugaltrockner 32 vorgeschaltet ist.

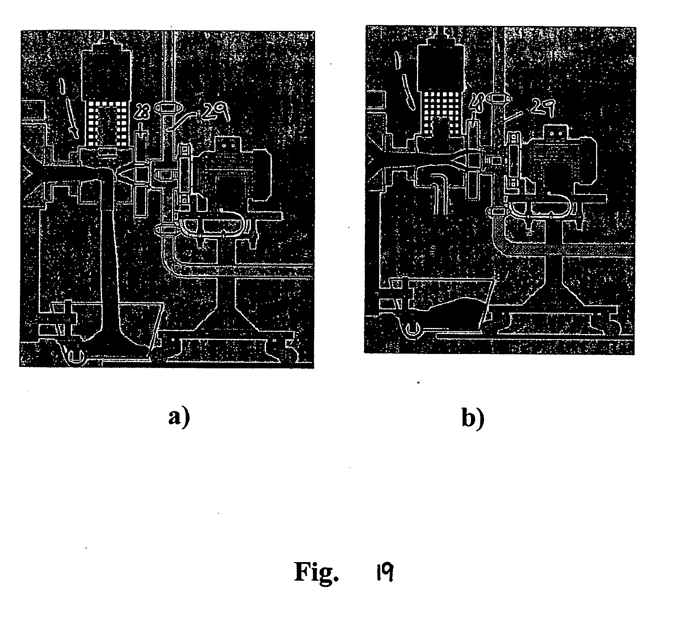

Beim Anfahren der Anlage wird dabei, wie zunächst in Figur 19a dargestellt, das Anfahrventil 1 in seine Bypassstellung gefahren, so dass der Schmelzestrom auf den Boden abgeleitet wird. Von einer zentralen Steuervorrichtung 33 wird der Schmelzevolumenstrom durch entsprechende Ansteuerung des Extruders 26 und/oder der Zahnradpumpe 28 kontinuierlich erhöht, bis eine Kapazitätsuntergrenze des ersten Granulierkopfes 24 mit der kleineren Durchsatzkapazität erreicht wird. Wie bereits erwähnt, ist es insbesondere bei einfriersensitiven Polymeren, z. B. Produkten mit hohem Kristallitschmelzpunkt, erforderlich, mit einem Minimaldurchsatz von beispielsweise größer 10 kg/h pro Düsenbohrung zu starten und zu operieren. Auch ist es erforderlich, die Vorrichtungskomponenten einschließlich des Anfahrventils 1 auf eine vorbestimmte Minimaltemperatur zu fahren, die materialabhängig sein kann.

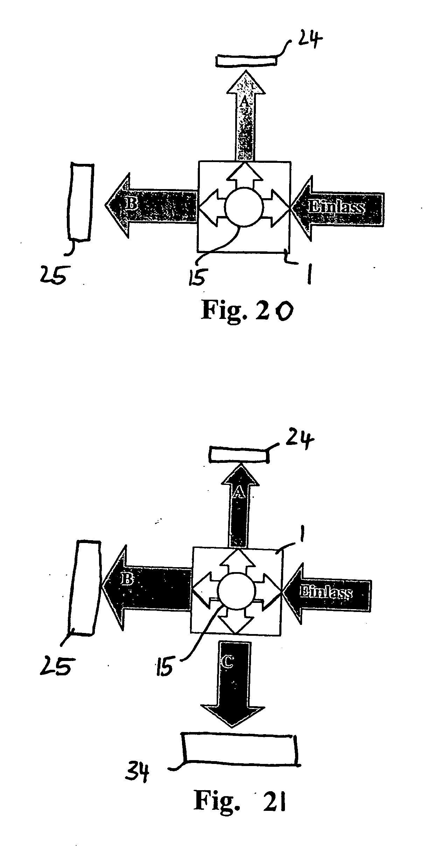

Sobald die Kapazitätsuntergrenze des genannten ersten Granulierkopfs 24 erreicht ist und/oder weitere anlagencharakteristische bzw. materialcharakteristische Betriebsparameter erreicht sind, steuert die Steuervorrichtung 33 das Anfahrventil 1 derart an, dass der Ventilschieber 15 in seine erste Produktionsstellung gefahren wird, in der die Schmelze auf den ersten Granulierkopf 24 geleitet wird. Figur 20 verdeutlicht diesen kleineren Schmelzevolumenstrom auf den ersten Granulierkopf 24 durch den Pfeil A.

Sobald die Granulierung durch den ersten Granulierkopf 24 angefahren ist, wird der Schmelzevolumenstrom weiter erhöht, bis die Kapazitätsuntergrenze des zweiten Granulierkopfes 25 erreicht ist, die oberhalb der Kapazitätsuntergrenze des ersten Granulierkopfes 24 liegt und vorteilhafterweise etwa im Bereich der Kapazitätsobergrenze des genannten ersten Granulierkopfes 24 liegt. Die Kapazitätsbereiche der genannten beiden Granulierköpfe 24 und 25 schließen vorzugsweise nahtlos aneinander an bzw. kann eine geringfügige Überlappung vorgesehen sein. Nachdem der Schmelzevolumenstrom auf die genannte Kapazitätsuntergrenze des zweiten Granulierkopfes 25 hochgefahren ist, steuert die Steuervorrichtung 33 den Ventilschieber 15 in seine zweite Produktionsstellung, so dass in Sekundenschnelle der Volumenstrom von dem ersten Granulierkopf 24 auf den zweiten Granulierkopf 25 umgeleitet wird.

Durch das Anfahren des Granulierprozesses des zweiten, größeren Granulierkopfes 25 unter Vorschaltung des Granulierprozesses über den ersten, kleineren Granulierkopf 24 können beträchtliche Effizienzsteigerungen erreicht und Anfahrverluste vermieden werden.

An den folgenden Beispielen soll der wirtschaftliche Vorteil verdeutlicht werden:

Beispiel 1:

Eine Granulierung für PP Compounds ausgangs eines Zweischneckenextruders mit z.B. 150 Bohrungen in der Düsenplatte und einem angenommenen VolumenstromFenster von 10 kg/h und Bohrung bis 35 kg/h und Bohrung verarbeitet normalerweise zwischen 1.500 kg/h bis zu 5.250 kg/h. Hierbei wird notwendigerweise die Schnittgeschwindigkeit des Granulators um den Faktor 3,5 nachgeführt; man startet bei 1.500 kg/h und 1.0301/min einer gegebenen Messerkombination und erhöht die Messerdrehzahl linear auf 3.600 1/min für 5.250 kg/h. Die so erzeugten Granulate haben dann die jeweils gleichen Gewichte. Würde man an dieser gegebenen Maschine nun einen 2. Granulierkopf montieren mit zum Beispiel 45 Bohrungen und der resultierenden Kapazität, von 450 -1.575 kg/h so erweitert sich das Produktionsfenster auf annähernd Faktor 12. Die gleiche Maschine könnte somit von 450 - 5.250 kg/h eines qualitativ hochwertigen Granulates erzeugen.

Bei Berücksichtigung des schlechtesten Falles (ca. 3 Minuten Anfahrnotwendigkeit bis zum tatsächlichen Start mit minimal notwendiger Durchsatzleistung) bedeutet das für den o.g. Fall:

Mit Standard Anfahrventil:

$$\text{3 Minuten x 1.500 kg/h = 75 kg Materialverluste, pro Aufstartvorgang.}$$

Mit Bidirectionalem Anfahrventil würde das bedeuten:

$$\text{3 Minuten x 450 kg/h = 22,5 kg Materialverluste, pro Aufstartvorgang.}$$

Hinzu kommt noch, dass die gleiche Produktionsmaschine, die für die Herstellung von 1.500 kg/h 3 Minuten benötigt, schon wesentlich eher die 450 kg/h erreichen wird. Das kann die Anfahrzeit wiederum auf ein Drittel reduzieren, was in Summe dann bedeutet:

$$\text{54 Sekunden x 450 kg/h = 6,75 kg Materialverluste, pro Aufstartvorgang}$$

Wie in diesem Beispiel dokumentiert, eröffnet diese Option der Erfindung also eine Reduzierung der Verlustmenge pro Aufstartvorgang um Faktor 11,11. Für die Produktionsstätte bedeutet das, dass zum einen weniger Material-Verluste insgesamt entstehen, die dann entsorgt oder aufbereitet werden müssen und zum anderen ein schnelleres Starten erlaubt wird, was weniger Personalaufwand und insgesamt weniger Handling Aufwand (Kunststoffe müssen bei Austritt aus dem Anfahrventil nach unten = Boden abgesaugt und gekühlt werden, was natürlich die Betriebskosten direkt beeinflusst) bedeutet.

Bei nur einem Produktwechsel pro Tag und Rohmaterialpreisen von 1,2 €/kg bedeutet das, dass pro Tag 81,9 € eingespart werden können; dieses ist ein jährliches Einsparpotential von 29.893,50€/a.

Beispiel 2:

Eine Granulierung für PET ausgangs eines Reaktors mit z.B. 250 Bohrungen in der Düsenplatte und einem angenommenen Volumenstrom- Fenster von 30 kg/h und Bohrung bis 50 kg/h und Bohrung verarbeitet normalerweise zwischen 7.500 kg/h bis zu 12.500 kg/h. Hierbei wird notwendigerweise die Schnittgeschwindigkeit des Granulators um den Faktor 1,67 nachgeführt; man startet bei 7.500 kg/h und 1.796 1/min einer gegebenen Messerkombination und erhöht die Messerdrehzahl linear auf 3.000 1/min für 12.500 kg/h. Die so erzeugten Granulate haben dann die jeweils gleichen Gewichte. Würde man an dieser gegebenen Maschine nun einen 2. Granulierkopf montieren mit zum Beispiel 150 Bohrungen und der resultierenden Kapazität von 4.500 - 7.500 kg/h so erweitert sich das Produktionsfenster auf annähernd Faktor 2,78. Die gleiche Maschine könnte somit von 4.500 -12.500 kg/h eines qualitativ hochwertigen Granulates erzeugen.

Bei Berücksichtigung des schlechtesten Falles (ca. 2 Minuten Anfahrnotwendigkeit bis zum tatsächlichen Start mit minimal notwendiger Durchsatzleistung) bedeutet das für den o.g. Fall:

Mit Standard Anfahrventil:

**2 Minuten x 7.500 kg/h = 250 kg Materialverluste, pro Aufstartvorgang.**

Mit Bidirectionalem Anfahrventil würde das bedeuten:

**2 Minuten x 4.500 kg/h = 150 kg Materialverluste, pro Aufstartvorgang.**

Hinzu kommt noch, dass die gleiche Produktionsmaschine, die für die Herstellung von 7.500 kg/h 2 Minuten benötigt, schon wesentlich eher die 4.500 kg/h erreichen wird. Das kann die Anfahrzeit wiederum reduzieren, was in Summe dann bedeutet: 72 Sekunden x 4.500 kg/h = 90 kg Materialverluste, pro Aufstartvorgang

Wie in diesem Beispiel dokumentiert, eröffnet diese Option der Erfindung also eine Reduzierung der Verlustmenge pro Aufstartvorgang um Faktor 2,78. Für die Produktionsstätte bedeutet das, dass zum einen weniger Material-Verluste insgesamt entstehen, die dann entsorgt oder aufbereitet werden müssen und zum anderen ein schnelleres Starten erlaubt wird, was weniger Personalaufwand und insgesamt weniger Handling Aufwand (Kunststoffe müssen bei Austritt aus dem Anfahrventil nach unten = Boden abgesaugt und gekühlt werden, was natürlich die Betriebskosten direkt beeinflusst) bedeutet.

Beispiel 3:

Eine Granulierung für PET ausgangs eines Reaktors mit z.B. 250 Bohrungen in der Düsenplatte und einem angenommenen Volumenstrom- Fenster von 30 kg/h und Bohrung bis 50 kg/h und Bohrung verarbeitet normalerweise zwischen 7.500 kg/h bis zu 12.500 kg/h. Hierbei wird notwendigerweise die Schnittgeschwindigkeit des Granulators um den Faktor 1,67 nachgeführt; man startet bei 7.500 kg/h und 1.796 1/min einer gegebenen Messerkombination und erhöht die Messerdrehzahl linear auf 3.000 1/min für 12.500 kg/h. Die so erzeugten Granulate haben dann die jeweils gleichen Gewichte. Würde man an dieser gegebenen Maschine nun einen 2. Granulierkopf montieren mit zum Beispiel 150 Bohrungen und der resultierenden Kapazität von 4.500 - 7.500 kg/h so erhöhte sich das Produktionsfenster auf annähernd Faktor 2,78. Die gleiche Maschine könnte somit von 4.500 -12.500 kg/h eines qualitativ hochwertigen Granulates erzeugen. Macht man sich nun die Option eines multidirektionalen Anfahrventils zu Nutze und installiert eine weitere dritte Düsenplatte/ Granulierkopf Kombination, wie in Figur 21 gezeigt, hat dieses eine weitere Reduktion der minimalen Anfahrleistung zur Folge. Nimmt man z.B. eine dritte Düse mit 90 Bohrungen, so erhält man eine Durchsatzleistungsspanne von 2.700 kg/h bis 4.500 kg/h. Die Granuliereinrichtung ist so schließlich im Range von 2.700 - 12.500 kg/h verfügbar. So erhöht sich das Produktionsfenster auf annähernd Faktor 4,63.

Für diesen Fall gilt analog des vorbenannten: Bei Berücksichtigung des schlechtesten Falles (ca. 2 Minuten Anfahrnotwendigkeit bis zum tatsächlichen Start mit minimal notwendiger Durchsatzleistung) bedeutet das für den o.g. Fall:

Mit Standard Anfahrventil:

**2 Minuten x 7.500 kg/h = 250 kg Materialverluste, pro Aufstartvorgang.**

Mit multidirektionalem Anfahrventil würde das bedeuten:

**2 Minuten x 2.700 kg/h = 90 kg Materialverluste, pro Aufstartvorgang.**

Hinzu kommt noch, dass die gleiche Produktionsmaschine, die für die Leistung von 7.500 kg/h ca. 2 Minuten benötigt, sicher schon wesentlich eher die 2.700 kg/h erreichen wird. Das kann die Anfahrzeit wiederum um die Hälfte reduzieren, was in Summe dann bedeutet:

$$\text{43,2 Sekunden x 2.700 kg/h = 32,4 kg Materialverluste, pro Aufstartvorgang}$$

Wie in diesem Beispiel dokumentiert, eröffnet diese Option der Erfindung also eine Reduzierung der Verlustmenge pro Aufstartvorgang um Faktor 7,72. Für die Produktionsstätte bedeutet das, dass zum einen weniger Material-Verluste insgesamt entstehen, die dann entsorgt oder aufbereitet werden müssen und zum anderen ein schnelleres Starten erlaubt wird, was weniger Personalaufwand und insgesamt weniger Handling Aufwand (Kunststoffe müssen bei Austritt aus dem Anfahrventil nach unten = Boden abgesaugt und gekühlt werden, was natürlich die Betriebskosten direkt beeinflusst) bedeutet.

Für eine vollkontinuierliche Granulierung bedeutet dies, dass bei einem Produktwechsel pro Woche und Rohmaterialpreisen von 1,2 €/kg insgesamt 261,12 €/Woche eingespart werden können; dieses ist ein jährliches Einsparpotential von 13.578,24€/a.

Für eine diskontinuierliche Granulierung bedeutet dies, dass bei nur einem Produktwechsel pro Tag (= 50t Ansatz mit 20h Reaktionszeit und 4h Granulieraustragszeit) und Rohmaterialpreisen von 1,2 €/kg insgesamt 261,12 €/Tag eingespart werden können; dieses ist ein jährliches Einsparpotential von 95.308,8€Ja.

Auch wenn vorstehend der Einsatz des Anfahrventils 1 in einer Unterwassergranuliervorrichtung beschrieben ist, können sich entsprechende Vorteile auch mit anderen Granulierverfahren erreichen lassen, so z. B. bei der Stranggranulierung oder der Wasserringgranulierung, wobei ggf. auch die Granulierköpfe mit den unterschiedlichen Durchsatzkapazitäten solche unterschiedlichen Granulierverfahren benutzen können.

Die Produktströme A und B (vgl. Figur 20) können sich für die Option in den folgenden Anwendungsbeispielen unterscheiden:

Beide Ströme benutzen jeweils gleiches Granulierverfahren (Stranggranulierung/Stranggranulierung; Wasserringgranulierung/Wasserringgranulierung; Unterwassergranulierung/Unterwassergranulierung) unter Benutzung der jeweils notwendigen Düsenplatten, die entweder gleicher Geometrie in Profil und Anzahl von Bohrungen sind, oder gleicher Geometrie in Profil und unterschiedlicher Anzahl von Bohrungen sind, oder unterschiedlicher Geometrie in Profil und gleicher Anzahl von Bohrungen sind, oder unterschiedlicher Geometrie in Profil und unterschiedlicher Anzahl von Bohrungen sind, oder eine der vorhergehenden Möglichkeiten haben aber einer jeweils anderen Baugröße zugeordnet werden können.

Beide Ströme benutzen jeweils ein anderes Granulierverfahren (Stranggranulierung/Wasserringgranulierung oder Unterwassergranulierung; Wasserringgranulierung/Stranggranulierung oder Unterwassergranulierung; Unterwassergranulierung/ Wasserringgranulierung oder Stranggranulierung) unter Benutzung der jeweils notwendigen Düsenplatten, die entweder gleicher Geometrie in Profil und Anzahl von Bohrungen sind, oder gleicher Geometrie in Profil und unterschiedlicher Anzahl von Bohrungen sind, oder unterschiedlicher Geometrie in Profil und gleicher Anzahl von Bohrungen sind, oder unterschiedlicher Geometrie in Profil und unterschiedlicher Anzahl von Bohrungen sind, oder eine der vorhergehenden Möglichkeiten haben, aber einer jeweils anderen Baugröße zugeordnet werden.

Die von allen bevorzugte Methode ist die Unterwassergranulierung/Unterwassergranulierung Einsatzvariante, da hierbei das insgesamt größte Verarbeitungsfenster produktionsseitig angeboten wird.

**Patentansprüche**

1. Anfahrventil für eine Granuliervorrichtung mit einem ersten Schmelzeerzeugeranschluss (3), einem ersten Granulatoranschluss (5) und einem ersten Schmelzekanal (7) zur Verbindung des Schmelzeerzeugeranschlusses mit dem Granulatoranschluss, einem zweiten Granulatoranschluss (6), einem zweiten Schmelzeerzeugeranschluss (4) sowie einem zweiten Schmelzekanal (8) zur Verbindung des zweiten Schmelzeerzeugeranschlusses (4) mit dem zweiten Granulatoranschluss (6), sowie einem Ventilkorpus zur Steuerung des Durchlasses zumindest eines Schmelzekanals (7, 8),
   **dadurch gekennzeichnet, daß**
   die beiden Schmelzekanäle (7, 8) separat voneinander und überlappu,ngsfrei ausgebildet sind und daß der Ventilkorpus (15) in einer Ventilausnehmung, die mit beiden Schmelzekanälen (7, 8) und einem Bypaßkanal in Verbindung steht, zwischen einer ersten Betriebsstellung, in der der erste Schmelzeerzeugeranschluß (3) auf den ersten Granulatoranschluss (5) und der zweite Schmelzeerzeugeranschluss (4) auf den zweiten Granulatoranschluss (6) durchgeschaltet ist, und einer zweiten Betriebsstellung, in der der erste Schmelzeerzeugeranschluss (3) und/oder der zweite Schmelzeerzeugeranschluß (4) auf den Bypasskanal durchgeschaltet ist, hin- und herbewegbar ist.

**2.** Anfahrventil nach dem vorhergehenden Anspruch, wobei der Ventilkorpus (15) einen Ventilschieber bildet, der axial verschieblich in der Ventilausnehmung sitzt, wobei sich die Ventilausnehmung quer zu den Schmelzekanälen (7, 8) erstreckt.

**3.** Anfahrventil nach einem der vorhergehenden Ansprüche, wobei der Ventilkorpus (15) in einer Richtung quer zu den Verbindungen zwischen den Schmelzeerzeuger- und Granulatoranschlüssen bewegbar gelagert ist.

**4.** Anfahrventil nach einem der vorhergehenden Ansprüche, wobei die Schmelzeerzeuger- und Granulatoranschlüsse (3, 4, 5, 6) derart ausgebildet sind, dass sie durch Schnellverschlusskupplungen an den Schmelzeerzeuger bzw. den jeweiligen Granulatorkopf anschließbar sind.

**5.** Granuliervorrichtung zum Granulieren von Kunststoffen und/oder Polymeren, mit einem Anfahrventil (1) gemäß einem der vorhergehenden Ansprüche, wobei an den zumindest zwei Granulatoranschlüssen (5, 6) jeweils ein Granulierkopf (24, 25, 34) angeschlossen und an dem Schmelzeerzeugeranschluss (3) ein Schmelzeerzeuger (26, 27) mit variablem Schmelzevolumenstrom angeschlossen ist, **dadurch gekennzeichnet, dass** die zumindest zwei Granulierköpfe (24, 25, 34) unterschiedliche Durchlasskapazitäten besitzen und eine Steuervorrichtung (33) zum Umschalten der Verbindung des Schmelzeerzeugeranschlusses (3) des Anfahrventils (1) von einem der Granulierköpfe (24) auf einen anderen der Granulierköpfe (25) in Abhängigkeit des Schmelzevolumenstroms des Schmelzeerzeugers (26, 27) vorgesehen ist.

**6.** Granuliervorrichtung nach dem vorhergehenden Anspruch, wobei die Steuervorrichtung (33) Steuermittel besitzt, die das Anfahrventil (1) auf einen ersten Granulierkopf (24) mit kleinerer Durchsatzkapazität schaltet, wenn der Schmelzevolumenstrom unter einer Kapazitätsuntergrenze eines zweiten Granulierkopfes (25) mit größerer Durchsatzkapazität und/oder oberhalb einer Kapazitätsuntergrenze des ersten Granulierkopfes liegt, und das Anfahrventil auf den zweiten Granulierkopf (25) schaltet, wenn der Schmelzevolumenstrom oberhalb der Kapazitätsuntergrenze des zweiten Granulierkopfes (25) und/oder unterhalb einer Kapazitätsuntergrenze eines dritten Granulierkopfes (34) mit noch größerer Durchsatzkapazität liegt.

**7.** Granuliervorrichtung nach einem der vorhergehenden Ansprüche 5 oder 6, wobei die Steuervorrichtung (33) Anfahrsteuermittel besitzt, die in einem ersten Schritt die Schaltweiche (15) des Anfahrventils (1) in eine erste Betriebsstellung fahren, in der die Schmelze auf einen ersten Granulierkopf (24) mit minimaler Durchsatzkapazität geleitet wird und den Schmelzeerzeuger (26, 27) auf einen Volumenstrom fährt, der im Bereich der unteren Kapazitätsgrenze des ersten Granulierkopfes (24) liegt, die sodann in einem zweiten Schritt den Volumenstrom des Schmelzeerzeugers (26, 27) bis zu einer oberen Kapazitätsgrenze des ersten Granulierkopfes (24) und/oder zu einer unteren Kapazitätsgrenze des zweiten Granulierkopfs (25) mit größerer Durchsatzkapazität steigern, und die schließlich in einem dritten Schritt die Schaltweiche (15) des Anfahrventils (1) in eine zweite Betriebsstellung fahren, in der die Schmelze auf den zweiten Granulierkopf (25) geleitet wird.

**8.** Granuliervorrichtung nach dem vorhergehenden Anspruch, wobei die Anfahrsteuermittel derart ausgebildet sind, dass vor dem genannten ersten Schritt die Schaltweiche (15) in einer Bypassstellung, in der die in das Anfahrventil (1) geleitete Schmelze an allen Granulierköpfen (24, 25, 34) vorbei abgeleitet wird, gehalten wird, bis der Schmelzevolumenstrom in den Bereich der Kapazitätsuntergrenze des ersten Granulierkopfs mit minimaler Durchsatzkapazität gefahren ist.

**9.** Granuliervorrichtung nach einem der vorhergehenden Ansprüche, wobei die zumindest zwei Granulierköpfe (24, 25, 34) einander ergänzende Durchsatzkapazitätsbereiche besitzen, vorzugsweise nahtlos aneinander anschließende Durchsatzkapazitätsbereiche haben.

**10.** Granuliervorrichtung nach einem der vorhergehenden Ansprüche, wobei Erfassungsmittel zur Erfassung des in das Anfahrventil (1) geleiteten Schmelzevolumenstroms vorgesehen sind und die Steuervorrichtung (33) in Abhängigkeit eines Signals der Erfassungsmittel das Anfahrventil (1) automatisch umschaltet.

**11.** Granuliervorrichtung nach einem der vorhergehenden Ansprüche, wobei zumindest einer der Granulierköpfe (24, 25, 34), vorzugsweise jeder der Granulierköpfe (24, 25, 34) einen Unterwassergranulierkopf bildet.

**12.** Granuliervorrichtung nach einem der Ansprüche 5 bis 10, wobei zumindest einer der Granulierköpfe (24, 25, 34) einen Stranggranulierkopf und/oder einen Wasserringgranulierkopf bildet, wobei vorzugsweise zumindest ein anderer der Granulierköpfe (24, 25, 34) einen Unterwassergranulierkopf bildet.

**13.** Granuliervorrichtung nach einem der Ansprüche 5 bis 12, wobei das Anfahrventil (1) in dem Schmelzekanal (7) eine Schaltweiche (14) aufweist, die in einer ersten Produktionsstellung den Schmelzeerzeugeranschluss (3) mit dem ersten Granulatoranschluss (5) und in einer zweiten Produktionsstellung den Schmelzeerzeugeranschluss (3) mit dem zweiten Granulatoranschluss (6) verbindet, wobei in dem Schmelzekanal (7) eine Anfahrweiche (14) vorgesehen ist, die in einer Produktionsstellung die Verbindung des Schmelzeerzeugeranschlusses (3) mit dem ersten und/oder zweiten Granulatoranschluss (5, 6) freigibt und in einer Anfahrstellung den ersten und/oder zweiten Granulatoranschluss (5, 6) von der Verbindung mit dem Schmelzeerzeugeranschluss (3) absperrt und den Schmelzeerzeugeranschluss (3) mit einer Bypassöffnung (22) verbindet, und wobei die Anfahrweiche (14) und die Schaltweiche (14) miteinander gekoppelt, insbesondere in einen gemeinsamen Ventilkorpus (15) integriert sind und von einem gemeinsamen Ventilaktor (16) betätigbar sind.

**14.** Granuliervorrichtung nach dem vorhergehenden Anspruch, wobei die Anfahr- bzw. Schaltweiche (14) von einem zylindrischen Ventilkorpus gebildet wird, der mehrere separate Produktionskanäle (18, 19) aufweist und längsverschieblich in einer Ventilausnehmung, insbesondere -bohrung, gelagert ist.

**15.** Granuliervorrichtung nach einem der Ansprüche 5 bis 14, wobei Mittel zur Bestimmung, insbesondere Sensoren zur Erfassung der Schmelzeviskosität, der Massetemperatur der Schmelze, des Massedrucks der Schmelze, des Volumenstroms der Schmelze, des Entgasungszustandes, der Granulatgröße und/oder der Granulatform vorgesehen sind, und wobei die Steuervorrichtung (33) das Anfahrventil (1) in Abhängigkeit zumindest eines Signals der genannten Erfassungsmittel schaltet.


**Claims**

**1.** A diverter valve for a pelletizing apparatus comprising a first melt generator connection (3), a first pelletizer connection (5) and a first melt passage (7) for the connection of the melt generator connection to the pelletizer connection, a second pelletizer connection (6), a second melt generator connection (4) as well as a second melt passage (8) for the connection of the second melt generator connection (4) to the second pelletizer connection (6) as well as a valve body for the control of the passage of at least one melt passage (7, 8),
**characterized in that**
the two melt passages (7, 8) are configured separately from one another and free of overlap; and **in that** the valve body (15) in a valve recess which is in communication with both melt passages (7, 8) and with a bypass passage can be moved to and fro between a first operating position in which the first melt generator connection (3) is switched through to the first pelletizer connection (5) and the second melt generator connection (4) is switched through to the second pelletizer connection (6) and a second operating position in which the first melt generator connection (3) and/or the second melt generator connection (4) is/are switched through to the bypass passage.

**2.** A diverter valve in accordance with the preceding claim, wherein the valve body (15) forms a valve gate which is axially displaceably seated in the valve recess, with the valve recess extending transversely to the melt passages (7, 8).

**3.** A diverter valve in accordance with one of the preceding claims, wherein the valve body (15) is movably supported in a direction transversely to the connections between the melt generator connection and the pelletizer connection.

**4.** A diverter valve in accordance with one of the preceding claims, wherein the melt generator connections and the pelletizer connections (3, 4, 5, 6) are configured such that they can be connected to the melt generator and/or to the respective pelletizer head by quick-closing couplings.

**5.** A pelletizing apparatus for the pelletizing of plastics and/or polymers comprising a diverter valve (1) in accordance with one of the preceding claims, wherein a respective pelletizing head (24, 25, 34) is connected to the at least two pelletizer connections (5, 6) and a melt generator (26, 27) having a variable melt volume flow is connected to the melt generator connection (3), **characterized in that** the at least two pelletizing heads (24, 25, 34) have different throughput capacities and a control apparatus (33) is provided for the switchover of the connection of the melt generator connection (3) of the diverter valve (1) from one of the pelletizing heads (24) to another of the pelletizing heads (25) in dependence on the melt volume flow of the melt generator (26, 27).

**6.** A pelletizer apparatus in accordance with the preceding claim, wherein the control apparatus (33) has control means which switches the diverter valve (1) to a first pelletizing head (24) having a smaller throughput capacity when the melt volume flow is below a lower capacity limit of a second pelletizing head (25) having a larger throughput capacity and/or above a lower capacity limit of the first pelletizing head and switches the diverter valve to the second pelletizing head (25) when the melt volume flow is above the lower capacity limit of the second pelletizing head (25) and/or below a lower capacity limit of a third pelletizing head (34) having an even larger throughput capacity.

7. A pelletizer apparatus in accordance with one of the preceding claims 5 or 6, wherein the control apparatus (33) has start-up control means which, in a first step, move the switching gate (15) of the diverter valve (1) into a first operating position in which the melt is directed to a first pelletizing head (24) having a minimum throughput capacity and operates the melt generator (26, 27) to a volume flow which is in the range of the lower capacity limit of the first pelletizing head (24), which then, in a second step, increase the volume flow of the melt generator (26, 27) up to an upper capacity limit of the first pelletizing head (24) and/or to a lower capacity limit of the second pelletizing head (25) having a larger throughput capacity, and which finally, in a third step, operate the switching gate (15) of the diverter valve (1) into a second operating position in which the melt is directed to the second pelletizing head (25).

8. A pelletizer apparatus in accordance with the preceding claim, wherein the start-up control means are configured such that the switching gate (15) is kept before the said first step in a bypass position in which the melt directed into the diverter valve (1) is directed past all pelletizing heads (24, 25, 34) until the melt volume flow is operated in the range of the lower capacity limit of the first pelletizing head having a minimum throughput capacity.

9. A pelletizer apparatus in accordance with one of the preceding claims, wherein the at least two pelletizing heads (24, 25, 34) have mutually complementary throughput capacity ranges, preferably adjoining one another seamlessly.

10. A pelletizer apparatus in accordance with one of the preceding claims, wherein detection means are provided for the detection of the melt volume flow directed into the diverter valve (1) and the control apparatus (33) automatically switches over the diverter valve (1) in dependence on a signal of the detection means.

11. A pelletizer apparatus in accordance with one of the preceding claims, wherein at least one of the pelletizing heads (24, 25, 34), preferably each of the pelletizing heads (24, 25, 34), forms an underwater pelletizing head.

12. A pelletizer apparatus in accordance with one of the claims 5 to 10, wherein at least one of the pelletizing heads (24, 25, 34) forms an extrusion pelletizing head and/or a water ring pelletizing head, with preferably at least one other of the pelletizing heads (24, 25, 34) forming an underwater pelletizing head.

13. A pelletizer apparatus in accordance with one of the claims 5 to 12, wherein the diverter valve (1) has a switching gate (14) in the melt passage (7) which connects the melt generator connection (3) to the first pelletizer connection (5) in a first production position and connects the melt generator connection (3) to the second pelletizer connection (6) in a second production position; wherein a diverter gate (14) is provided in the melt passage (7) which releases the connection of the melt generator connection (3) to the first and/or second pelletizer connections (5, 6) in a production position and blocks the first and/or second pelletizer connections (5, 6) from communication with the melt generator connection (3) and connects the melt generator connection (3) to a bypass opening (22) in a start-up position; and wherein the diverter gate (14) and the switching gate (14) are coupled to one another, are in particular integrated in a common valve body (15) and can be actuated by a common valve actuator (16).

14. A pelletizer apparatus in accordance with the preceding claim, wherein the diverter gate or switching gate (14) is formed by a cylindrical valve body which has a plurality of separate production passages (18, 19) and is longitudinally displaceably supported in a valve recess, in particular a valve bore.

15. A pelletizer apparatus in accordance with one of the claims 5 to 14, wherein means for determination, in particular sensors for the detection of the melt viscosity, of the mass temperature of the melt, of the mass pressure of the melt, of the volume flow of the melt, of the degassing state, of the pellet size and/or of the pellet shape are provided, and wherein the control apparatus (33) switches the diverter valve (1) in dependence on at least one signal of the said detection means.

**Revendications**

1. Vanne de démarrage pour un dispositif de granulation, avec un premier raccord de générateur de matière fondue (3), un premier raccord de granulateur (5) et un premier canal de matière fondue (7) pour la communication du

EP 1 970 180 B1

raccord de générateur de matière fondue avec le raccord de granulateur, un deuxième raccord de granulateur (6), un deuxième raccord de générateur de matière fondue (4) ainsi qu'un deuxième canal de matière fondue (8) pour la communication du deuxième raccord de générateur de matière fondue (4) avec le deuxième raccord de granulateur (6), ainsi qu'un corps de vanne pour la commande du passage d'au moins un canal de matière fondue (7, 8),

**caractérisée en ce que**

les deux canaux de matière fondue (7, 8) sont configurés séparés l'un de l'autre et sans chevauchement et **en ce que** le corps de vanne (15) peut être déplacé dans un sens et dans l'autre, dans un évidement de vanne qui est en communication avec les deux canaux de matière fondue (7, 8) et avec un canal de by-pass, entre une première position de fonctionnement, dans laquelle le premier raccord de générateur de matière fondue (3) communique avec le premier raccord de granulateur (5) et le deuxième raccord de générateur de matière fondue (4) communique avec le deuxième raccord de granulateur (6), et une deuxième position de fonctionnement, dans laquelle le premier raccord de générateur de matière fondue (3) et/ou le deuxième raccord de générateur de matière fondue (4) communiquent avec le canal de by-pass.

2. Vanne de démarrage selon la revendication précédente, le corps de vanne (15) formant un tiroir de vanne qui est monté coulissant axialement dans l'évidement de vanne, sachant que l'évidement de vanne s'étend transversalement par rapport aux canaux de matière fondue (7, 8).

3. Vanne de démarrage selon l'une quelconque des revendications précédentes, le corps de vanne (15) étant monté mobile dans une direction transversale par rapport aux communications entre les raccords du générateur de matière fondue et les raccords de granulateur.

4. Vanne de démarrage selon l'une quelconque des revendications précédentes, dans laquelle les raccords de générateur de matière fondue et les raccords de granulateur (3, 4, 5, 6) sont configurés de telle sorte qu'ils peuvent être raccordés au générateur de matière fondue, respectivement au granulateur respectif par des raccords à verrouillage rapide.

5. Dispositif de granulation pour la granulation de matières plastiques et/ou de polymères, avec une vanne de démarrage (1) selon l'une quelconque des revendications précédentes, sachant qu'à chacun desdits au moins deux raccords de granulateur (5, 6) est raccordée une tête de granulation (24, 25, 34) et qu'au raccord de générateur de matière fondue (3) est raccordé un générateur de matière fondue (26, 27) avec un débit volumique variable de matière fondue, **caractérisé en ce que** lesdites au moins deux têtes de granulation (24, 25, 34) possèdent des capacités en débit différentes et **en ce qu'**un dispositif de commande (33) est prévu pour la commutation des communications du raccord de générateur de matière fondue (3) de la vanne de démarrage (1) d'une des têtes de granulation (24) à une autre tête de granulation (25) en fonction du débit volumique du générateur de matière fondue (26, 27).

6. Dispositif de granulation selon la revendication précédente, dans lequel le dispositif de commande (33) possède des moyens de commande qui commutent la vanne de démarrage (1) sur une première tête de granulation (24) avec une capacité en débit plus petite quand le débit volumique de matière fondue se trouve en dessous d'une limite inférieure de capacité d'une deuxième tête de granulation (25) avec une capacité en débit plus grande et/ou au-dessus d'une limite inférieure de capacité de la première tête de granulation (24), et qui commutent la vanne de démarrage sur la deuxième tête de granulation (25) quand le débit volumique de matière fondue se trouve au-dessus de la limite inférieure de capacité de la deuxième tête de granulation (25) et/ou en dessous de la limite inférieure de capacité d'une troisième tête de granulation (34) ayant une capacité en débit encore plus grande.

7. Dispositif de granulation selon l'une quelconque des revendications précédentes 5 ou 6, dans lequel le dispositif de commande (33) possède des moyens de commande de démarrage qui, dans une première étape, amènent l'aiguillage (15) de la vanne de démarrage (1) dans une première position de fonctionnement dans laquelle la matière fondue est acheminée à une première tête de granulation (24) avec une capacité en débit minimale, et règlent le générateur de matière fondue (26, 27) à un débit volumique qui est de l'ordre de la limite inférieure de capacité de la première tête de granulation (24), et qui, dans une deuxième étape, augmente ensuite le débit volumique du générateur de matière fondue (26, 27) jusqu'à une limite supérieure de capacité en débit de la première tête de granulation (24) et/ou jusqu'à une limite inférieure de capacité de la deuxième tête de granulation (25) ayant une capacité en débit supérieure, et qui amène finalement dans une troisième étape l'aiguillage (15) de la vanne de démarrage (1) dans une deuxième position de fonctionnement, dans laquelle la matière fondue est acheminée à la deuxième tête de granulation (25).

**8.** Dispositif de granulation selon la revendication précédente, dans lequel les moyens de commande de démarrage sont configurés de telle sorte qu'avant ladite première étape, l'aiguillage (15) est maintenu dans une position de by-pass, dans laquelle la matière fondue acheminée dans la vanne de démarrage (1) est détournée de toutes les têtes de granulation (24, 25, 34), jusqu'à ce que le débit volumique de matière fondue ait été amené à l'ordre de grandeur de la limite inférieure de capacité de la première tête de granulation de capacité en débit minimale.

**9.** Dispositif de granulation selon l'une quelconque des revendications précédentes, dans lequel lesdites au moins deux têtes de granulation (24, 25, 34) possèdent des plages de capacité en débit se complétant les unes les autres, de préférence dans lequel elles ont des plages de capacité en débit se suivant sans transition.

**10.** Dispositif de granulation selon l'une quelconque des revendications précédentes, dans lequel des moyens de saisie sont prévus pour la saisie du débit de matière fondue acheminée dans la vanne de démarrage (1), et dans lequel le dispositif de commande (33) commute automatiquement la vanne de démarrage (1) en fonction d'un signal des moyens de saisie.

**11.** Dispositif de granulation selon l'une quelconque des revendications précédentes, dans lequel au moins une des têtes de granulation (24, 25, 34), de préférence chacune des têtes de granulation (24, 25, 34), forme une tête de granulation sous l'eau.

**12.** Dispositif de granulation selon l'une quelconque des revendications 5 à 10, dans lequel au moins une des têtes de granulation (24, 25, 34) forme une tête de granulation cylindrique et/ou une tête de granulation à anneau d'eau, sachant qu'une autre des têtes de granulation (24, 25, 34) forme de préférence une tête de granulation sous l'eau.

**13.** Dispositif de granulation selon l'une quelconque des revendications 5 à 12, dans lequel la vanne de démarrage (1) comporte dans le canal de matière fondue (7) un aiguillage de commande (14) qui, dans une première position de production, relie le raccord de générateur de matière fondue (3) au premier raccord de granulateur (5) et dans une deuxième position de production le raccord de générateur de matière fondue (3) au deuxième raccord de granulateur (6), un aiguillage de démarrage (14) étant prévu dans le canal de matière fondue (7), aiguillage qui dégage dans une position de production la communication du raccord de générateur de matière fondue (3) avec le premier et/ou le deuxième raccord de granulateur (5, 6) et coupe dans une position de démarrage le premier et/ou le deuxième raccord de granulateur (5, 6) de la communication avec le raccord de générateur de matière fondue (3) et relie le raccord de générateur de matière fondue (3) à une ouverture de by-pass (22), et sachant que l'aiguillage de démarrage (14) et l'aiguillage de commande (14) sont couplés ensemble, en particulier sont intégrés dans un corps de vanne (15) commun et peuvent être actionnés par un actionneur de vanne (16) commun.

**14.** Dispositif de granulation selon la revendication précédente, dans lequel l'aiguillage de démarrage, respectivement de commande (14) est formé par un corps de vanne cylindrique qui comporte plusieurs canaux de production (18, 19) séparés et qui est monté coulissant longitudinalement dans un évidement, en particulier un perçage, de la vanne.

**15.** Dispositif de granulation selon l'une quelconque des revendications 5 à 14, dans lequel sont prévus des moyens de détermination, en particulier des capteurs pour la saisie de la viscosité de la matière fondue, de la température en masse de la matière fondue, de la pression en masse de la matière fondue, du débit volumique de la matière fondue, de l'état de dégazage, de la taille des granulés et/ou de la forme des granulés, et dans lequel le dispositif de commande (33) commute la vanne de démarrage (1) en fonction d'au moins un signal des moyens de détermi-nation.

Fig. 1

D

C

17

17

1

2
3

A
B
B
A

6
4

6

10

D

Fig. 2

5

C

2

3

6

C

Fig. 3

16

15

14

A

11

4

8
21
19

13

Fig. 4

SCHNITTDARSTELLUNG C-C

**fig. 5**

SCHNITTDARSTELLUNG D-D

**fig. 6**

SCHNITTDARSTELLUNG B-B

**fig. 7**

SCHNITTDARSTELLUNG A-A

Fig. 8

Fig. 9

Fig. 10

SCHNITTDARSTELLUNG C-C

Fig. 11

SCHNITTDARSTELLUNG D-D

Fig. 12

SCHNITTDARSTELLUNG B-B

Fig. 13

SCHNITTDARSTELLUNG A-A

Fig. 14

SCHNITTDARSTELLUNG A-A

Fig. 15

Fig. 16

SCHNITTDARSTELLUNG C-C

Fig. 17

**Fig. 19**

a)

b)

Fig. 19

**Fig. 20**

**Fig. 21**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10234228 A1
- DE 3815897 C2
- EP 0698461 B1
- US 5879720 A
- US 4321026 A
- US 4984977 A
- WO 9211993 A
- DE 69621101 T2
- DE 19754863 C2
- DE 10030584